# EUROPÄISCHE PATENTSCHRIFT

(11) **EP 2 757 514 B1**
(45) Veröffentlichungstag und Bekanntmachung des Hinweises auf die Patenterteilung: **06.04.2016**
(21) Anmeldenummer: 13151804.5
(22) Anmeldetag: 18.01.2013
(51) Int. Cl.: G06Q 20/20, H04L 12/58

(54) **Verfahren und Anordnung zum Einrichten einer Datenübertragungsverbindung**
Method and arrangement for setting up a data communication link
Procédé et agencement destinés à créer une liaison de transmission de données

(43) Veröffentlichungstag der Anmeldung: 23.07.2014
(73) Patentinhaber: Cosboo GmbH, 10709 Berlin (DE)
(72) Erfinder:
(74) Vertreter: RGTH

(56) Entgegenhaltungen:
- EP-A1- 2 528 045
- US-A1- 2002 198 777

## Beschreibung

### Beschreibung

Die Erfindung betrifft ein Verfahren zum Einrichten einer Datenübertragungsverbindung. Die Erfindung betrifft weiterhin eine Anordnung zum Durchführen dieses Verfahrens.

### Stand der Technik

Mit der Verbreitung von Kommunikationsnetzwerken wie dem Internet entwickelte sich die Idee, Teilnehmer für das Empfangen von Werbung zu bezahlen. Dabei wird die Werbung vorwiegend in Form elektronischer Nachrichten, d.h. als E-Mails, versandt. Derartige Werbe-E-Mails, für die der Empfänger üblicherweise vom Werbetreibenden eine Vergütung im Centbereich erhält, werden als Bezahl-E-Mails oder Paidmails bezeichnet und sind von den Empfängern erwünscht. Dienste, die Bezahl-E-Mails oder Paidmails verschicken und demgemäß als Paidmailer bezeichnet werden, entwickelten sich zeitgleich mit der obigen Idee.

Wie weiterhin aus der Internet-Enzyklopädie "Wikipedia" - vgl. den Internetauftritt "http://de.wikipedia.org/wiki/Paidmail", Eintrag gelesen am 18.12.2012 um 09:44 Uhr - entnehmbar ist, erstellt beim System der Bezahl-E-Mails zunächst ein Werbetreibender eine Werbe-E-Mail mit seiner Werbung. Diese wird vom Paidmailer an Mitglieder dieses Systems versendet. Die Vergütung erfolgt in Geld oder Punkten. Dafür wird die Werbe-E-Mail geöffnet, gelesen und eine Bestätigungsnachricht durch das Klicken auf eine in die Werbe-E-Mail eingebundene Adressverknüpfung, d.h. einen sogenannten Link, bestätigt. Der Leser wird damit auf den beworbenen Internetauftritt, die sogenannte Website, des Werbetreibenden geleitet.

Eine Auszahlung der Vergütung erfolgt, wenn eine Auszahlungsgrenze erreicht wird. Die Vergütung liegt in der Regel im Bereich von 0,1 Cent bis 0,99 Cent, je nach bestätigter Werbe-E-Mail und Anbieter. Einen höheren Verdienst haben Empfänger von Bezahl-E-Mails, d.h. Mitglieder eines solchen Bezahl-E-Mail-Systems, wenn sie selbst weitere Empfänger bzw. Mitglieder werben. In diesem Fall erhält das werbende Mitglied einen Prozentsatz des Umsatzes vom geworbenen Mitglied oder eine einmalige Vergütung.

Ein derartiges System bietet einem Werbetreibenden den Vorteil, seine Werbung einem Kreis von Mitgliedern zuzusenden, bei denen ein erhöhtes Interesse am Empfang und an der Kenntnisnahme der Werbung besteht und somit das Verhältnis zwischen den aufgewendeten Kosten für die Werbung und deren Nutzen, d.h. der Akzeptanz seitens der Empfänger der Werbung, verbessert ist.

Um diesen Vorteil zu erzielen ist es jedoch wichtig, den mit der Werbung anzusprechenden Kreis der Mitglieder möglichst genau auf diejenige Personengruppe einzustellen, bei der ein wirkliches Interesse an mit der betreffenden Werbung beworbenen Produkten bzw. Dienstleistungen besteht. Dazu ist es unter anderem erforderlich, dass alle Mitglieder des genannten Systems in diesem mit korrekten Angaben zu Ihrer Person registriert sind. Doppelte oder Scheinmitgliedschaften sind der angestrebten Funktion des Systems abträglich. Da ein Missbrauch eines solchen Systems bis zu einem gewissen Grad nicht ausgeschlossen werden kann, wird das Ziel, mit der versandten Werbung ausschließlich tatsächlich existierende Mitglieder mit wirklichem Interesse an der Werbung zu erreichen, nur unvollständig erreicht werden können.

Aus der EP 0 929 874 B1 sind ein Verfahren und eine Vorrichtung zum Aufbau einer Kundendaten beinhaltenden Datenbank bekannt, wobei an Kunden zu verkaufende Produkte oder an Kunden beim Kauf von Produkten oder Dienstleistungen ausgehändigte Belege jeweils mit einem Code versehen werden und der Code vom Kunden nach dem Erwerb des Produktes bzw. der Dienstleistung mit den jeweiligen Kunden kennzeichnenden Daten über ein Kommunikationsnetzwerk, insbesondere über Internet oder ein Telefonnetz an eine Datensammelstation übermittelt werden. Dabei wird der Code vor dem Erwerb des Produktes bzw. der Dienstleistung ohne Mitwirkung des Kunden in einem der Datensammelstation zugeordneten Referenzspeicher gespeichert. Nach der durch den Kunden vorgenommenen Übermittlung des Codes an die Datensammelstation erfolgt ein Vergleich dieses vom Kunden übermittelten Codes mit den zuvor im Referenzspeicher abgelegten Codes. Zur Organisation eines Rabatt- bzw. Kupon - bzw. Belohnungssystems werden von der Datensammelstation nur diejenigen übermittelten Codes berücksichtigt, die zuvor bereits im Referenzspeicher abgelegt wurden.

Dem Kunden wird also gemäß der Lehre der EP 0 929 874 B1 bei Tätigung eines Kaufs ein insbesondere individueller, d.h. ein der speziellen Kaufaktion zugeordneter Code zugänglich gemacht, welchen der Kunde nach Tätigung des Kaufs über ein Kommunikationsnetzwerk, insbesondere über Internet oder ein Telefonnetz an eine Datensammelstation übermittelt. Gemeinsam mit dem Code übermittelt der Kunde auch ihn selbst kennzeichnende Daten, wie beispielsweise seine Postanschrift oder seine Internet-Adresse. Vorzugsweise werden letztgenannte Daten in der Datensammelstation dann gespeichert, wenn seitens der Datensammelstation erkannt wird, daß es sich bei dem übermittelten Code um einen gültigen Code handelt.

Bei Durchführung des Verfahrens nach der EP 0 929 874 B1 dient der mit dem Produkt oder der Dienstleistung ausgehändigte Code dazu, nachzuweisen, daß der Kunde das betreffende Produkt bzw. die betreffende Dienstleistung tatsächlich erworben hat, d.h. der Kunde weist durch die Kenntnis des Codes nach, daß ein entsprechender Kauf getätigt wurde.

Um einen Mißbrauch des Systems zu vermeiden, wird der Code vor dem Erwerb des Produktes bzw. der Dienstleistung ohne Mitwirkung des Kunden in einem der Datensammelstation zugeordneten Referenzspeicher gespeichert. Nach der durch den Kunden vorgenommenen Übermittlung des Codes an die Datensammelstation wird dieser vom Kunden übermittelte Code mit den zuvor im Referenzspeicher abgelegten Codes verglichen und schließlich werden nur diejenigen übermittelten Codes berücksichtigt, die zuvor bereits im Referenzspeicher abgelegt wurden.

Die vorstehend erläuterte Vorgehensweise soll sicherstellen, dass nur solche Codes als gültige Codes berücksichtigt werden, die auch tatsächlich an Kunden gemeinsam mit einem erworbenen Produkt oder einer erworbenen Dienstleistung ausgehändigt wurden.

Für eine Übertragung auf ein Bezahl-E-Mail-System der eingangs beschriebenen Art zur Vermeidung von doppelten oder Scheinmitgliedschaften ist diese Vorgehensweise jedoch schon deshalb ungeeignet, weil sie zu jedem Bearbeitungsvorgang einer Werbe-E-Mail durch ein Mitglied, umfassend das Öffnen, Lesen und Veranlassen einer Bestätigungsnachricht, einen umfangreichen Datenverkehr auslösen würde, der für das Mitglied des Bezahl-E-Mail-Systems einen hohen Arbeitsaufwand verursachen würde, welcher einem leichten und zügigen Umgang mit dem Bezahl-E-Mail-System hinderlich wäre und dieses als Einnahmequelle für das Mitglied unattraktiv machen würde. Dies gilt insbesondere deshalb, weil das Mitglied des Bezahl-E-Mail-Systems üblicherweise eine Anzahl von Werbe-E-Mails bearbeiten wird, die um ein Vielfaches höher ist als die Anzahl der in der EP 0 929 874 B1 beschriebenen Kaufaktionen.

### Darstellung der Erfindung: Aufgabe, Lösung, Vorteile

Die Erfindung hat die Aufgabe, ein Verfahren zu schaffen, welches bei einem Bezahl-E-Mail-System doppelte oder Scheinmitgliedschaften sicher auszuschließen vermag und für ein Mitglied bzw. einen Benutzer eines derartigen Bezahl-E-Mail-Systems einfach, schnell und sicher handhabbar ist. Die Erfindung hat ferner die Aufgabe, eine Anordnung zur Durchführung eines derartigen Verfahrens zu schaffen.

Diese Aufgabe wird gelöst durch ein Verfahren zum Einrichten einer ersten Datenübertragungsverbindung, vorzugsweise über ein Kommunikationsnetzwerk, zwischen einem durch einen Benutzer betriebenen Datenübertragungsendgerät und einer ersten Verwaltungseinheit, wobei zum Herstellen der ersten Datenübertragungsverbindung die erste Verwaltungseinheit durch das Datenübertragungsendgerät angewählt und von dem Datenübertragungsendgerät ein Zugangsdatensatz an die erste Verwaltungseinheit übertragen wird. Beim erstmaligen Anwählen der ersten Verwaltungseinheit durch das Datenübertragungsendgerät wird eine zweite Datenübertragungsverbindung zwischen dem Datenübertragungsendgerät und einer zweiten Verwaltungseinheit hergestellt, wobei die zweite Datenübertragungsverbindung zum Registrieren des Benutzers und/oder des Datenübertragungsendgerätes vorgesehen ist. Zum Einleiten dieses Registriervorgangs wird ein den Benutzer und/oder das Datenübertragungsendgerät eindeutig identifizierender erster Identifikationsdatensatz, der Bankauswahldaten eines vom Benutzer ausgewählten Bankinstituts umfasst, vom Datenübertragungsendgerät an die zweite Verwaltungseinheit übersandt. Von der zweiten Verwaltungseinheit wird einerseits ein Anfragedatensatz, der einen dem Benutzer und/oder dem Datenübertragungsendgerät eindeutig zugeordneten Kenndatensatz umfasst, an eine Bankverwaltungseinheit des ausgewählten Bankinstitut übermittelt und andererseits ein Quittierungsdatensatz, der den Kenndatensatz umfasst, an das Datenübertragungsendgerät gesandt. Auf die Übermittlung des Anfragedatensatzes hin wird von der Bankverwaltungseinheit des ausgewählten Bankinstituts ein Kundenidentifizierungsverfahren durchgeführt. Zur eindeutigen Zuordnung des Benutzers zum Anfragedatensatz für das Kundenidentifizierungsverfahren wird vom Benutzer der Kenndatensatz aus dem Quittierungsdatensatz an die Bankverwaltungseinheit übermittelt und von der Bankverwaltungseinheit mit dem Kenndatensatz aus dem Anfragedatensatz verglichen. Das Kundenidentifizierungsverfahren wird nur dann durchgeführt, wenn dieser Vergleich eine Übereinstimmung der übermittelten Kenndatensätze ergibt. Nach Durchführen des Kundenidentifizierungsverfahrens wird von der Bankverwaltungseinheit ein zweiter Identifikationsdatensatz, durch den Existenz und Identität des Benutzers als natürliche Person belegt wird, erzeugt, an die zweite Verwaltungseinheit übertragen, mit dort bereits vorhandenen zweiten Identifikationsdatensätzen vorher registrierter Benutzer verglichen und nur dann in der zweiten Verwaltungseinheit abgespeichert, wenn sich bei diesem Vergleich keine Übereinstimmung mit einem der bereits vorhandenen zweiten Identifikationsdatensätze ergibt. Der Zugangsdatensatz wird durch die zweite Verwaltungseinheit erzeugt und einerseits an das Datenübertragungsendgerät und andererseits an die erste Verwaltungseinheit übermittelt und in der ersten Verwaltungseinheit abgespeichert.

Dabei ist im Rahmen der vorliegenden Erfindung unter dem Benutzer eine natürliche Person zu verstehen, von der ein Datenübertragungsendgerät betrieben wird, welches z.B. mit einem Computer oder einer vergleichbaren Vorrichtung ausgestattet ist, die dazu ausgebildet ist, Daten zu empfangen und zu versenden. Ein derartiges Datenübertragungsendgerät kann z.B. durch einen PC, eine Telefon- oder Mobilfunkeinrichtung wie z.B. ein Mobiltelefon, vorzugsweise ein Smartphone, oder dergleichen gebildet sein. Derartige Datenübertragungsendgeräte sind dazu eingerichtet, über Datenübertragungsverbindungen mit anderen zum Empfangen und/oder Versenden von Daten ausgestalteten Vorrichtungen zur Daten- und/oder Nachrichtenübertragung Daten auszutauschen. Bevorzugt erfolgt ein derartiger Datenaustausch über ein Kommunikationsnetzwerk wie z.B. ein Telefonnetz, ein Mobilfunknetz, das Internet oder dergleichen, wodurch Datenverbindungen mit nahezu beliebigen Vorrichtungen zur Daten- und/oder Nachrichtenübertragung ermöglicht werden.

Zum Herstellen einer Datenübertragungsverbindung der im Zusammenhang mit der vorliegenden Erfindung betrachteten Art ist es erforderlich, dass die zum Empfangen und/oder Versenden von Daten ausgestaltete Vorrichtung, mit der vom Datenübertragungsendgerät aus ein Datenaustausch vorgenommen werden soll, vom Datenübertragungsendgerät angewählt wird, bevorzugt über das Kommunikationsnetzwerk durch Aufrufen einer Adresse, unter der die zum Empfangen und/oder Versenden von Daten ausgestaltete Vorrichtung an das Kommunikationsnetzwerk angeschlossen ist. Erfordert der Datenaustausch mit der zum Empfangen und/oder Versenden von Daten ausgestalteten Vorrichtung besondere Zugangsberechtigungen bzw. eine besondere Zugangsprozedur, sind zum Herstellen der Datenübertragungsverbindung zusätzlich zu der einfachen Anwahl üblicherweise noch bestimmte Zugangsdaten an die genannte, zum Empfangen und/oder Versenden von Daten ausgestaltete Vorrichtung zu übermitteln, mit denen das anwählende Datenübertragungsendgerät seine Berechtigung zu einem Zugang zu der betreffenden zum Empfangen und/oder Versenden von Daten ausgestalteten Vorrichtung nachweist. Vor dem Herstellen der Datenübertragungsverbindung muss somit diese Zugangsberechtigung erworben und damit im Zusammenhang ein Zugangsdatensatz erstellt werden, der alle nötigen Zugangsdaten umfasst, die an die zum Empfangen und/oder Versenden von Daten ausgestaltete Vorrichtung zum Herstellen der Datenübertragungsverbindung zu übermitteln sind. Der Vorgang des Erwerbs dieser Zugangsberechtigung und des Erstellens des Zugangsdatensatzes ist im Rahmen der Beschreibung der vorliegenden Erfindung als Einrichten der Datenübertragungsverbindung bezeichnet.

Insbesondere wird bei der vorliegenden Erfindung durch das Einrichten der ersten Datenübertragungsverbindung der Zugangsdatensatz erstellt, durch dessen Übermittlung von dem durch den Benutzer betreibbaren Datenübertragungsendgerät an die erste Verwaltungseinheit nach Anwählen dieser ersten Verwaltungseinheit durch das Datenübertragungsendgerät diese erste Datenübertragungsverbindung zum Betreiben derselben hergestellt wird.

Die erste Verwaltungseinheit ist im Rahmen der vorliegenden Erfindung eine zum Empfangen und/oder Versenden von Daten ausgestaltete Vorrichtung der genannten Art, die darüber hinaus auch zum beliebigen Verarbeiten, Bereitstellen und Speichern der Daten eingerichtet ist. Bevorzugt ist die erste Verwaltungseinheit durch eine Datenverarbeitungsanlage, eine Mehrzahl von Datenverarbeitungsanlagen oder einen oder mehrere Teile einer oder mehrerer Datenverarbeitungsanlagen gebildet, zu denen die genannte erste Datenübertragungsverbindung vom Datenübertragungsendgerät zwecks Austausch von Daten herstellbar ist. Besonders bevorzugt handelt es sich bei der ersten Verwaltungseinheit um einen über das Kommunikationsnetzwerk, insbesondere das Internet, anwählbaren Rechner mit Datenbank oder ein sogenanntes Portal. Die erste Datenübertragungsverbindung ist dann dazu vorgesehen, Daten an diesen Rechner bzw. das Portal zu übermitteln bzw. Daten aus diesem Rechner, der Datenbank oder dem Portal zu empfangen.

Gemäß der vorliegenden Erfindung ist ferner eine zweite Verwaltungseinheit vorgesehen, die in einer zu der ersten Verwaltungseinheit vergleichbaren Weise ausgestaltet ist. Zu dieser zweiten Verwaltungseinheit findet ein Datenaustausch vom Datenübertragungsendgerät her über die zweite Datenübertragungsverbindung statt. Abweichend von der ersten Datenübertragungsverbindung ist jedoch zum Herstellen der zweiten Datenübertragungsverbindung die Übermittlung eines Zugangsdatensatzes nicht erforderlich. Die zweite Verwaltungseinheit ist bevorzugt durch eine Datenverarbeitungsanlage, eine Mehrzahl von Datenverarbeitungsanlagen oder einen oder mehrere Teile einer oder mehrerer Datenverarbeitungsanlagen gebildet, die mit der bzw. den die erste Verwaltungseinheit bildenden Datenverarbeitungsanlage, Mehrzahl von Datenverarbeitungsanlagen oder einen oder mehreren Teilen einer oder mehrerer Datenverarbeitungsanlagen ganz oder teilweise übereinstimmen können, bevorzugt aber von diesen schaltungstechnisch, räumlich, betrieblich und/oder organisatorisch getrennt angeordnet sind

Erfindungsgemäß wird diese zweite Datenübertragungsverbindung zwischen dem Datenübertragungsendgerät und der zweiten Verwaltungseinheit hergestellt, wenn der Benutzer erstmalig die erste Datenübertragungsverbindung zu der ersten Verwaltungseinheit herzustellen versucht, das heißt beim erstmaligen Anwählen der ersten Verwaltungseinheit durch das Datenübertragungsendgerät des Benutzers. Die Funktion der zweiten Verwaltungseinheit besteht dabei darin, einen Registriervorgang durchzuführen, durch den der Benutzer bzw. das von ihm betriebene Datenübertragungsendgerät als zugriffsberechtigt zu der ersten Verwaltungseinheit anerkannt und ihm der für das Herstellen der ersten Datenübertragungsverbindung erforderliche Zugangsdatensatz übermittelt wird. Ist die zweite Verwaltungseinheit wie zuvor beschrieben von der ersten Verwaltungseinheit getrennt, erfolgen die Registrierung des Benutzers bzw. des von ihm betriebenen Datenübertragungsendgerätes und der Zugang zur ersten Verwaltungseinheit über die erste Datenübertragungsverbindung ebenfalls auf voneinander getrennten Teilen einer oder mehrerer Datenverarbeitungsanlagen.

Zum Einleiten dieses Registriervorgangs wird ein den Benutzer und/oder das Datenübertragungsendgerät eindeutig identifizierender erster Identifikationsdatensatz vom Datenübertragungsendgerät an die zweite Verwaltungseinheit übersandt. Bevorzugt umfasst der erste Identifikationsdatensatz eine E-Mail-Adresse des Benutzers, die eine eindeutige Identifizierung der Person des Benutzers ermöglicht und darüber hinaus zum Übermitteln von Daten von der zweiten Verwaltungseinheit an das Datenübertragungsendgerät und somit an den Benutzer verwendbar ist.

Erfindungsgemäß umfasst der Identifikationsdatensatz ferner Bankauswahldaten eines vom Benutzer ausgewählten Bankinstituts. Wie nachstehend näher erläutert, ist die Auswahl eines Bankinstituts ein durch den Benutzer beim Einleiten des Registriervorgangs vorzunehmender Verfahrensschritt. Dazu ist es erforderlich, das ausgewählte Bankinstitut gegenüber der zweiten Verwaltungseinheit zu benennen. Diese Benennung wird durch vom ersten Identifikationsdatensatz umfasste Daten oder Informationen bewirkt, die im Zusammenhang mit der vorliegenden Erfindung als Bankauswahldaten bezeichnet sind.

Der vorliegenden Erfindung gemäß ist das ausgewählte Bankinstitut mit einer Bankverwaltungseinheit ausgestattet, die in einer der ersten und der zweiten Verwaltungseinheit entsprechenden Weise ebenfalls als zum Empfangen und/oder Versenden von Daten ausgestaltete Vorrichtung ausgebildet ist, die wie jene auch zum beliebigen Verarbeiten, Bereitstellen und Speichern der Daten eingerichtet ist. Bevorzugt ist die Bankverwaltungseinheit entsprechend durch eine Datenverarbeitungsanlage, eine Mehrzahl von Datenverarbeitungsanlagen oder einen oder mehrere Teile einer oder mehrerer Datenverarbeitungsanlagen gebildet. Zwischen dieser Bankverwaltungseinheit und der zweiten Verwaltungseinheit ist eine im folgenden noch näher beschriebene Datenübertragungsverbindung zwecks Austausches von Daten herstellbar, bevorzugt ebenfalls über das Kommunikationsnetzwerk, insbesondere das Internet. Auch die Bankverwaltungseinheit ist besonders bevorzugt als anwählbarer Rechner mit Datenbank oder sogenanntes Portal ausgestaltet. Die Datenübertragungsverbindung zwischen der Bankverwaltungseinheit und der zweiten Verwaltungseinheit ist dann dazu vorgesehen, Daten an diesen Rechner bzw. das Portal zu übermitteln bzw. Daten aus diesem Rechner, der Datenbank oder dem Portal zu empfangen.

Zu den Daten, die über die Datenübertragungsverbindung zwischen der Bankverwaltungseinheit und der zweiten Verwaltungseinheit an die Erstere übermittelt werden, zählt zunächst der vorgenannte Anfragedatensatz. Dieser Anfragedatensatz umfasst einen Kenndatensatz, der von der zweiten Verwaltungseinheit dem Benutzer und/oder dem Datenübertragungsendgerät eindeutig zugeordnet wird. Der Kenndatensatz wird von der zweiten Verwaltungseinheit aus dem ersten Identifikationsdatensatz erzeugt, sobald dieser beim Einleiten des Registriervorgangs vom Benutzer mit Hilfe des Datenübertragungsendgerätes über die zweite Datenübertragungsverbindung an die zweite Verwaltungseinheit übermittelt worden ist. Bevorzugt umfasst der Kenndatensatz eine Benutzer-Identifikationsnummer, kurz als Benutzer-ID bezeichnet, wobei dieser Begriff auch andere Zeichen umfassende Zeichenkombinationen einschließt, bzw. ist der Kenndatensatz durch eine Benutzer-ID gebildet. Besonders bevorzugt wird diese Benutzer-ID, d.h. der Kenndatensatz, dem Benutzer und/oder dem von ihm betriebenen Datenübertragungsendgerät einmalig dauerhaft zugewiesen.

Der beschriebene Kenndatensatz ist ferner von einem Quittierungsdatensatz umfasst, der nach Erzeugen des Kenndatensatzes von der zweiten Verwaltungseinheit über die zweite Datenübertragungsverbindung an das Datenübertragungsendgerät und damit den Benutzer übermittelt wird. Bevorzugt erfolgt diese Übermittlung per E-Mail. Mit der Übertragung des Quittierungsdatensatzes an das Datenübertragungsendgerät wird an den Benutzer einerseits eine Bestätigung darüber geleitet, dass die von ihm eingeleitete Registrierung bei der zweiten Verwaltungseinheit dort eingegangen und bearbeitet ist. Andererseits erhält der Benutzer auch den Kenndatensatz, d.h. die Benutzer-ID, mitgeteilt. Damit liegt der Kenndatensatz sowohl der Bankverwaltungseinheit als auch dem Benutzer bzw. im Datenübertragungsendgerät vor.

Durch die Übermittlung des Anfragedatensatzes wird der Bankverwaltungseinheit avisiert, dass ein Benutzer mit dem betreffenden Kenndatensatz mit hoher Wahrscheinlichkeit in Kürze die Durchführung eines Kundenidentifizierungsverfahrens einzuleiten beabsichtigt. Außerdem wird der Bankverwaltungseinheit mit dem Anfragedatensatz der Kenndatensatz dieses Benutzers, insbesondere die Benutzer-ID, übermittelt, so dass diese als Grundlage für eine eindeutige Identifizierung des Benutzers gegenüber der Bankverwaltungseinheit und seine eindeutige Zuordnung zu dem für ihn einzuleitenden und für die Bankverwaltungseinheit mit der Übermittlung des Anfragedatensatzes beginnenden Kundenidentifizierungsverfahren verfügbar ist. Zur Prüfung dieser eindeutigen Zuordnung des Benutzers zum Anfragedatensatz wird vom Benutzer der Kenndatensatz aus dem Quittierungsdatensatz an die Bankverwaltungseinheit übermittelt und von der Bankverwaltungseinheit mit dem Kenndatensatz aus dem Anfragedatensatz verglichen. Das Kundenidentifizierungsverfahren wird nur dann durchgeführt, wenn dieser Vergleich eine Übereinstimmung der übermittelten Kenndatensätze ergibt. Das Kundenidentifizierungsverfahren wird somit nicht durchgeführt, wenn der Bankverwaltungseinheit von der zweiten Verwaltungseinheit kein Anfragedatensatz und damit auch kein Kenndatensatz übermittelt wurde, sondern ein Benutzer sich lediglich bei der Bankverwaltungseinheit mit einem Kenndatensatz meldet, da in diesem Fall davon auszugehen ist, dass ein solcher Benutzer nicht bei der zweiten Verwaltungseinheit registriert ist.

Das Kundenidentifizierungsverfahren kann vom Bankinstitut mit Hilfe der Bankverwaltungseinheit selbst vorgenommen werden, oder das Bankinstitut kann eine andere Institution mit der Durchführung des Kundenidentifizierungsverfahrens beauftragen. Als eine derartige andere Institution kann die Deutsche Post AG herangezogen werden. Dazu ist aus der Internet-Enzyklopädie "Wikipedia" - vgl. den Internetauftritt "http://de.wikipedia.org/w/index.php?title=Postident&oldid=108626299", Eintrag gelesen am 16.01.2013 um 09:00 Uhr - entnehmbar, dass von der Deutschen Post AG ein Kundenidentifizierungsverfahren unter der Bezeichnung "Postident"-Verfahren als eine Methode der sicheren persönlichen Identifikation von Personen angeboten wird, die durch die Mitarbeiter der Deutschen Post AG vorgenommen wird. Das Verfahren wurde zur möglichst bequemen Gewährleistung der Auflagen des Geldwäschegesetzes eingeführt, das Banken gesetzlich verpflichtet, die Identität des Kunden bei der Kontoeröffnung festzuhalten. Man spricht beim Postident-Verfahren auch von einer unpersönlichen Legitimationsprüfung.

Zur Durchführung des "Postident"-Verfahrens gehen Unternehmen (meistens Banken, aber auch Mobilfunkanbieter) ein Vertragsverhältnis mit der Deutschen Post AG ein und erhalten hierfür eine Kundennummer zur Abrechnung. In der einfachsten Variante dieses "Postident"-Verfahrens, der sogenannten "Variante Basic", erstellt das Unternehmen für seine Kunden dann in der Regel einen Postident-Coupon mit individuell festgelegter Referenznummer für die unternehmensinterne Zuordnung der Identifizierungsunterlage. In einer Filiale der Deutschen Post AG legt der Kunde seinen Personalausweis oder Reisepass vor. Das "Postident"-Verfahren kann in Postfilialen und -agenturen mit elektronischem Postschalter angenommen und verarbeitet werden und steht somit in fast allen Postfilialen zur Verfügung. Der Postmitarbeiter überträgt die Daten des Ausweispapiers in den Coupon, welchen der Kunde anschließend prüft und unterschreibt. Diese Unterschrift wird durch Stempel und Unterschrift des Postmitarbeiters bestätigt und an das Unternehmen gesendet.

Auch andere Versandunternehmen in Deutschland, Österreich und in der Schweiz bieten ähnliche Identifikationsverfahren an.

Unabhängig davon, ob gemäß dem erfindungsgemäßen Verfahren das Kundenidentifizierungsverfahren durch die Bankverwaltungseinheit des ausgewählten Bankinstituts durchgeführt oder ob mit dieser Durchführung in einer Variante eine andere Institution vom Bankinstitut beauftragt wird, wird dabei ein Datensatz erzeugt, durch den Existenz und Identität des Benutzers als natürliche Person belegt werden, der also nachgeprüfte persönliche Daten des Benutzers umfasst, so insbesondere den Namen des Benutzers, seine Wohnanschrift, die Seriennummer seines Personalausweises oder Reisepasses, oder dergleichen. Dieser Datensatz wird als zweiter Identifikationsdatensatz bezeichnet.

Der zweite Identifikationsdatensatz wird im Rahmen des Kundenidentifizierungsverfahrens von der Bankverwaltungseinheit oder der damit beauftragten anderen Institution nach einem festgelegten Algorithmus erzeugt, der für denselben Benutzer stets dasselbe Ergebnis liefert, so dass ein Doppeleintrag bzw. eine Doppelregistrierung eines Benutzers stets eindeutig an der Übereinstimmung der für ihn zu zwei unterschiedlichen Zeitpunkten erzeugten zweiten Identifikationsdatensätze erkannt wird.

Gemäß der Erfindung wird der zweite Identifikationsdatensatz an die zweite Verwaltungseinheit übertragen. In der zweiten Verwaltungseinheit sind vergleichbare zweite Identifikationsdatensätze aller Benutzer gespeichert, die dort bereits einen Registriervorgang sowie ein Kundenidentifizierungsverfahren durchlaufen haben. Der Vergleich des neu übertragenen zweiten Identifikationsdatensatzes mit dem bereits vorhandenen Bestand an zweiten Identifikationsdatensätzen ergibt, ob der neu registrierte Benutzer bereits zu einem früheren Zeitpunkt schon einmal registriert wurde. Nur wenn das nicht der Fall ist, wird der neu übertragene zweite Identifikationsdatensatz des neu registrierten Benutzers in der zweiten Verwaltungseinheit abgespeichert. Dadurch wird eine doppelte Registrierung wirksam ausgeschlossen.

Der Zugangsdatensatz wird durch die zweite Verwaltungseinheit erzeugt und einerseits an das Datenübertragungsendgerät und andererseits an die erste Verwaltungseinheit übermittelt und in der ersten Verwaltungseinheit abgespeichert. Damit steht der Zugangsdatensatz sowohl dem Benutzer auch der ersten Verwaltungseinheit zur Verfügung, wodurch der Benutzer in die Lage versetzt wird, über das von ihm betriebene Datenübertragungsendgerät die erste Verwaltungseinheit anzuwählen und durch Übermitteln des Zugangsdatensatzes, dessen Gültigkeit von der ersten Verwaltungseinheit nun überprüfbar ist, die erste Datenübertragungsverbindung herzustellen. Erfindungsgemäß kann der Zugangsdatensatz von der zweiten Verwaltungseinheit entweder unmittelbar nach Zugang des ersten Identifikationsdatensatzes erzeugt und sowohl an die erste Verwaltungseinheit als auch an das Datenübertragungsendgerät übermittelt werden, oder in einer Variante den Zugangsdatensatz erst nach Eingang und Überprüfung des zweiten Identifikationsdatensatzes des zugehörigen Benutzers erzeugen und übermitteln.

Die Erfindung ermöglicht durch Einbinden eines Kundenidentifizierungsverfahrens in den Verfahrensablauf des Registriervorgangs ohne merklichen Zusatzaufwand für die erste Verwaltungseinheit eine verlässliche Prüfung, ob ein Benutzer tatsächlich als natürliche Person existiert. Damit wird ein Missbrauch der ersten Datenübertragungsverbindung und somit der ersten Verwaltungseinheit durch Verfälschung der den Benutzer identifizierenden Daten - z.B. des ersten Identifikationsdatensatzes - wirksam verhindert, insbesondere ist eine Simulation der Existenz eines Benutzers durch ein Datenübertragungsendgerät oder eine sonstige Datenverarbeitungseinrichtung sicher ausgeschlossen.

Die den Benutzer identifizierenden und seine persönlichen Daten enthaltenden Identifikationsdatensätze stehen dabei aber ausschließlich der zweiten Verwaltungseinheit zur Verfügung, während die erste Verwaltungseinheit lediglich die Zugangsdaten in Form des Zugangsdatensatzes zur Verfügung gestellt bekommt, die insoweit anonymisiert sind, als sie keinen unmittelbaren, offenen Hinweis auf die Identität des Benutzers enthalten, sondern lediglich den Kenndatensatz, insbesondere die Benutzer-ID, deren Zuordnung zu dem Benutzer aber ausschließlich in der zweiten Verwaltungseinheit hinterlegt ist. Dadurch ist für einen Benutzer der Schutz seiner persönlichen Daten beim Herstellen und Betreiben der ersten Datenübertragungsverbindung gewährleistet, und für die erste Verwaltungseinheit ist zugleich gewährleistet, dass der Benutzer tatsächlich als natürliche Person existiert. Dies ist insbesondere für Bezahl-E-Mail-Systeme ein wichtiger Vorteil.

Dabei ermöglicht die Übermittlung des Zugangsdatensatzes zum Herstellen und Betreiben der ersten Datenübertragungsverbindung einen einfachen und schnellen Nachweis der Zugangsberechtigung und damit ein einfaches, schnelles und sicheres herstellen der ersten Datenübertragungsverbindung, d.h. einen einfachen, schnellen und sicheren Zugang zur ersten Verwaltungseinheit.

Vorteilhafte Ausgestaltungen des erfindungsgemäßen Verfahrens sind in den auf den unabhängigen Verfahrensanspruch rückbezogenen Unteransprüchen gekennzeichnet.

Gemäß einer bevorzugten Weiterbildung des erfindungsgemäßen Verfahrens wird der Bankverwaltungseinheit des ausgewählten Bankinstituts zum Durchführen des Kundenidentifizierungsverfahrens vom Benutzer und/oder vom Datenübertragungsendgerät ein dritter Identifikationsdatensatz übermittelt. Dieser dritte Identifikationsdatensatz enthält alle Daten, die das ausgewählte Bankinstitut oder die vom ausgewählten Bankinstitut beauftragte andere Institution zum Durchführen des Kundenidentifizierungsverfahrens benötigt. Diese Daten werden jedoch nicht notwendigerweise als Teile des zweiten Identifikationsdatensatzes an die zweite Verwaltungseinheit übermittelt, oder es werden zumindest nicht notwendigerweise alle diese Daten zum Erzeugen des zweiten Identifikationsdatensatzes herangezogen bzw. in den zweiten Identifikationsdatensatz übernommen und dadurch an die zweite Verwaltungseinheit übermittelt, so dass auch hierbei für den Benutzer ein größtmöglicher Schutz seiner persönlichen Daten eingehalten wird.

Bei einer weiteren bevorzugten Ausführungsform des erfindungsgemäßen Verfahrens wird von der Bankverwaltungseinheit des ausgewählten Bankinstituts zum Durchführen des Kundenidentifizierungsverfahrens der vom Benutzer und/oder vom Datenübertragungsendgerät übermittelte dritte Identifikationsdatensatz mit einem zuvor in der Bankverwaltungseinheit gespeicherten Kundendatensatz eines beim ausgewählten Bankinstitut geführten Bankkunden verglichen und wird bei Übereinstimmung des dritten Identifikationsdatensatzes mit dem Kundendatensatz von der Bankverwaltungseinheit die Identität des Benutzers mit dem Bankkunden erkannt und der zweite Identifikationsdatensatz erzeugt.

Diese Ausführungsform betrifft bevorzugt den Fall, dass das Kundenidentifizierungsverfahren unmittelbar von der Bankverwaltungseinheit bzw. dem Bankinstitut mit Hilfe der Bankverwaltungseinheit durchgeführt wird. Dabei wird zur Vereinfachung des durchzuführenden Kundenidentifizierungsverfahrens die Tatsache genutzt, dass der Benutzer bereits als Kunde des Bankinstituts bei diesem ausgewiesen ist, d.h. der Benutzer hat sich zum Erstellen des Kundendatensatzes bereits als existierende natürliche Person ausweisen müssen, so dass diese Existenz und Identität durch den Kundendatensatz belegt ist und nicht noch einmal überprüft werden muss.

In einer vorteilhaften Weiterbildung des erfindungsgemäßen Verfahrens umfasst der dritte Identifikationsdatensatz wenigstens eines der folgenden Daten des Benutzers: Vorname, Nachname, Geburtsjahr, Geburtsmonat, Wohnort, Postleitzahl, Straße, Hausnummer, Nummer eines Ausweisdokuments. Durch diese Daten in ihrer Gesamtheit oder eine ausgewählte Kombination dieser Daten wird der Benutzer einfach, eindeutig und allgemeingültig identifiziert.

Nach einer anderen Ausführungsform des erfindungsgemäßen Verfahrens umfasst der Kundendatensatz wenigstens eines der folgenden Daten des Bankkunden: Vorname, Nachname, Geburtsjahr, Geburtsmonat, Wohnort, Postleitzahl, Straße, Hausnummer, Nummer eines Ausweisdokuments. Diese Daten werden vom Bankinstitut zur eindeutigen Identifizierung des Bankkunden wenigstens teilweise regelmäßig bzw. gemäß einschlägiger Gesetze zwangsläufig erhoben und liegen damit bereits für jeden Bankkunden ohne zusätzlichen Aufwand vor.

Gemäß einer noch anderen Ausgestaltung des erfindungsgemäßen Verfahrens umfasst der Zugangsdatensatz ein Zugangspasswort, welches zum Herstellen der ersten Datenübertragungsverbindung vom Datenübertragungsendgerät an die erste Verwaltungseinheit übertragen wird und durch das die Sicherheit beim Herstellen der ersten Datenübertragungsverbindung zusätzlich zur Benutzung des Kenndatensatzes erhöht wird.

In einer bevorzugten Weiterbildung des erfindungsgemäßen Verfahrens umfasst der Quittierungsdatensatz das Zugangspasswort.

Damit werden gemäß dieser Weiterbildung des Verfahrens durch den Quittierungsdatensatz bereits zusätzlich zum Kenndatensatz alle für das Herstellen der ersten Datenübertragungsverbindung notwendigen Daten an das Datenübertragungsendgerät und somit den Benutzer übermittelt. Insbesondere wird dann in einer weiteren Fortbildung des erfindungsgemäßen Verfahrens der Quittierungsdatensatz durch den Zugangsdatensatz gebildet.

Für den Fall, dass der Zugangsdatensatz erst nach Abschluss des Kundenidentifizierungsverfahrens und damit nach Zugang des zweiten Identifikationsdatensatzes in der zweiten Verwaltungseinheit von dieser erzeugt wird, ist die Übermittlung eines vom Zugangsdatensatz unabhängigen Quittierungsdatensatzes erforderlich, um dem Benutzer den ihm zugeteilten Kenndatensatz, d.h. insbesondere die ihm zugeteilte Benutzer-ID, für die Durchführung des Kundenidentifizierungsverfahrens zu übermitteln. Enthält dagegen der Quittierungsdatensatz bereits alle Daten des Zugangsdatensatzes, ist insbesondere der Quittierungsdatensatz identisch mit dem Zugangsdatensatz, wird dadurch ein Herstellen der ersten Datenübertragungsverbindung bereits vor Durchführung des Kundenidentifizierungsverfahrens erlaubt. Diese Variante ist jedoch z.B. für Bezahl-E-Mail-Systeme trotzdem vorteilhaft, wenn der Benutzer über die erste Datenübertragungsverbindung sich in die erste Verwaltungseinheit einwählen und dort z.B. Geld oder geldwerte Punkte oder dergleichen verdienen muss, mit denen z.B. Kosten des Kundenidentifizierungsverfahrens beglichen werden müssen.

Dazu wird vorteilhaft nach einer weiteren Fortbildung des erfindungsgemäßen Verfahrens von der ersten Verwaltungseinheit ein Statusdatensatz erzeugt, der eine Statusinformation über einen Parameter eines über die erste Datenübertragungsverbindung erfolgten Datenaustausches zwischen dem Datenübertragungsendgerät und der ersten Verwaltungseinheit enthält; ferner wird der Statusdatensatz von der ersten Verwaltungseinheit an die zweite Verwaltungseinheit übermittelt, wird die Statusinformation aus dem Statusdatensatz von der zweiten Verwaltungseinheit in den Anfragedatensatz eingefügt und an die Bankverwaltungseinheit übermittelt und wird das Kundenidentifizierungsverfahren von der Bankverwaltungseinheit in Abhängigkeit von der Statusinformation eingeleitet.

Als ein derartiger Parameter dient z.B. bei einem Bezahl-E-Mail-System ein Geldbetrag oder eine Anzahl geldwerter Punkte oder dergleichen, den bzw. die der Benutzer durch bearbeiten der Bezahl-E-Mails im Datenaustausch mit der ersten Verwaltungseinheit erwirbt. In diesem Fall kann die Statusinformation z.B. eine Information darüber umfassen, welche Höhe der erworbene Geldbetrag oder dergleichen angenommen hat bzw. ob die Höhe des erworbenen Geldbetrags oder dergleichen bereits zur Begleichung bestimmter Kosten oder dergleichen ausreicht. Diese Information wird dann mit dem Statusdatensatz übermittelt. In dem Maße, in dem die Durchführung des Kundenidentifizierungsverfahrens Kosten verursacht, die von dem Bankinstitut bzw. der Bankverwaltungseinheit der zweiten Verwaltungseinheit auferlegt werden, kann die Statusinformation bzw. der Statusdatensatz in einfacher Weise zur Steuerung benutzt werden, ob bzw. wann das Kundenidentifizierungsverfahren begonnen werden kann, wann also der Benutzer einen hinreichenden Geldbetrag oder dergleichen erworben hat, so dass er von der zweiten Verwaltungseinheit mit den Kosten des Kundenidentifizierungsverfahrens belastet werden kann, dass also z.B. Hinreichend Geld oder geldwerte Punkte oder dergleichen zur Deckung der Kosten des Kundenidentifizierungsverfahrens angesammelt worden sind. Bevorzugt enthält ferner der Statusdatensatz den Kenndatensatz, um die Statusinformation einwandfrei dem Benutzer zuordnen zu können.

Die oben genannte Aufgabe wird weiterhin gelöst durch eine Anordnung zum Durchführen eines Verfahrens der vorbeschriebenen Art, wobei diese Anordnung gekennzeichnet ist durch ein durch einen Benutzer betreibbares Datenübertragungsendgerät, eine erste Verwaltungseinheit, eine zwischen dem Datenübertragungsendgerät und der ersten Verwaltungseinheit herstellbare erste Datenübertragungsverbindung, eine zweite Verwaltungseinheit, eine zwischen dem Datenübertragungsendgerät und der zweiten Verwaltungseinheit herstellbare zweite Datenübertragungsverbindung, wenigstens eine über je eine Bank-Datenübertragungsverbindung mit der zweiten Verwaltungseinheit verbindbare Bankverwaltungseinheit und eine zwischen der ersten Verwaltungseinheit und der zweiten Verwaltungseinheit herstellbare dritte Datenübertragungsverbindung. Dabei bildet die wenigstens eine Bank-Datenübertragungsverbindung eine Datenübertragungsverbindung, die dem Abwickeln des im vorstehenden beschriebenen Datenaustausches zwischen der zweiten Verwaltungseinheit und der Bankverwaltungseinheit des jeweilig ausgewählten Bankinstituts dient, d.h. insbesondere der Übermittlung des Anfragedatensatzes von der zweiten Verwaltungseinheit an die Bankverwaltungseinheit und des zweiten Identifikationsdatensatzes von der Bankverwaltungseinheit an die zweite Verwaltungseinheit. Die zwischen der ersten Verwaltungseinheit und der zweiten Verwaltungseinheit herstellbare dritte Datenübertragungsverbindung dient bevorzugt dem Übermitteln des Zugangsdatensatzes von der zweiten Verwaltungseinheit an die erste Verwaltungseinheit. Für die betreffende Fortbildung des erfindungsgemäßen Verfahrens dient die dritte Datenübertragungsverbindung ferner zum Übermitteln des Statusdatensatzes von der ersten Verwaltungseinheit an die zweite Verwaltungseinheit. Ein weiterer Datenaustausch über die dritte Datenübertragungsverbindung kann sich darüber hinaus ergeben, wenn ein erstmalig die erste Verwaltungseinheit mit Hilfe des Datenübertragungsendgerätes anwählender Benutzer zur Einleitung des Registriervorgangs über die zweite Datenübertragungsverbindung mit der zweiten Verwaltungseinheit verbunden werden soll; dies ist jedoch von der besonderen Ausgestaltung des Vorgangs abhängig, mit dem der Benutzer nach Anwahl der ersten Verwaltungseinheit von dort an die zweite Verwaltungseinheit weitergeleitet wird.

Die erfindungsgemäße Anordnung bildet eine einfache und übersichtliche Konfiguration für die Durchführung des erfindungsgemäßen Verfahrens. Darüber hinaus ist durch die Trennung der ersten Verwaltungseinheit von der zweiten Verwaltungseinheit ein optimaler Schutz der persönlichen Daten des Benutzers gegenüber der ersten Verwaltungseinheit gewährleistet, da diese persönlichen Daten lediglich in der zweiten Verwaltungseinheit gespeichert sind. Damit eignet sich die erfindungsgemäße Anordnung auch für einen Datenaustausch zwischen dem Benutzer bzw. dem von ihm betriebenen Datenübertragungsendgerät und der ersten Verwaltungseinheit in Fällen, in denen an den Datenschutz für den Benutzer gegenüber der ersten Verwaltungseinheit besonders hohe Anforderungen gestellt werden. Der Benutzer bzw. das von ihm betriebene Datenübertragungsendgerät kann dann von der ersten Verwaltungseinheit eindeutig identifiziert werden, ohne dass der Benutzer persönliche Daten preisgibt.

Vorteilhafte Ausgestaltungen der erfindungsgemäßen Anordnung sind in den auf den unabhängigen Anordnungsanspruch rückbezogenen Unteransprüchen gekennzeichnet.

Eine vorteilhafte Weiterbildung der erfindungsgemäßen Anordnung ist dadurch gekennzeichnet, dass die erste Datenübertragungsverbindung und/oder die zweite Datenübertragungsverbindung und/oder die wenigstens eine Bank-Datenübertragungsverbindung und/oder die dritte Datenübertragungsverbindung über ein Kommunikationsnetzwerk, vorzugsweise über ein Telefonnetz und/oder das Internet, herstellbar sind. Das Kommunikationsnetzwerk in dieser Form bildet ein leistungsfähiges, universelles sowie einfach und kostengünstig verfügbares Datenübertragungsmittel.

Nach einer anderen vorteilhaften Ausgestaltung der erfindungsgemäßen Anordnung umfasst die erste Verwaltungseinheit und/oder die zweite Verwaltungseinheit und/oder die wenigstens eine Bankverwaltungseinheit je einen Datenverarbeitungs-, Telekommunikations- und/oder Vermittlungsmittel bildenden Verwaltungsrechner und je ein je eine Datenbank enthaltendes Speichermedium. Dabei werden von den jeweiligen Verwaltungsrechnern die den sie umfassenden Verwaltungseinheiten gemäß dem erfindungsgemäßen Verfahren zugeteilten und im vorstehenden beschriebenen Verfahrensschritte zur Datenverarbeitung ausgeführt. In der von der ersten Verwaltungseinheit umfassten Datenbank werden bevorzugt die Zugangsdatensätze der Benutzer gespeichert. In der von der zweiten Verwaltungseinheit umfassten Datenbank werden bevorzugt die Zugangsdatensätze, die ersten und die zweiten Identifikationsdatensätze, die Anfragedatensätze, die Quittierungsdatensätze und die Statusdatensätze gespeichert. In den von der wenigstens einen Bankverwaltungseinheit umfassten Datenbanken werden die Anfragedatensätze, die zweiten und dritten Identifikationsdatensätze sowie die Kundendatensätze gespeichert. Durch die damit erzielte getrennte Verarbeitung und Speicherung der unterschiedlichen Daten bzw. Datensätze ist für eine optimale Funktion der erfindungsgemäßen Anordnung und einen bestmöglichen Datenschutz gesorgt.

Die eingangs genannte Aufgabe wird ferner gelöst durch ein Computerprogrammprodukt, aufweisend Programmteile zum Ausführen eines Verfahrens der vorbeschriebenen Art. Außerdem wird die Aufgabe gelöst durch eine maschinenlesbare, insbesondere computerlesbare, Datenstruktur, erzeugt durch ein Verfahren der vorbeschriebenen Art und/oder durch mindestens ein Computerprogrammprodukt der genannten Art. Schließlich wird die Aufgabe auch gelöst durch einen maschinenlesbaren, insbesondere computerlesbaren, Datenträger, auf dem mindestens ein Computerprogrammprodukt der vorbezeichneten Art aufgezeichnet und/oder gespeichert ist und/oder auf dem mindestens eine Datenstruktur der vorbezeichneten Art zum Abruf bereit gehalten ist.

### Kurze Beschreibung der Zeichnungen

Ausführungsbeispiele der Erfindung sind in der Zeichnung dargestellt und werden im nachfolgenden näher beschrieben. Dabei sind übereinstimmende Elemente in den unterschiedlichen Figuren der Zeichnung mit demselben Bezugszeichen versehen. Es zeigen:
- Figur 1: ein Ablaufdiagramm eines Beispiels für ein erfindungsgemäßes Verfahren und
- Figur 2: ein grob schematisches Blockschaltbild einer Anordnung zur Durchführung des Beispiels für das erfindungsgemäße Verfahren gemäß Figur 1.

### Bevorzugte Ausführungsform der Erfindung

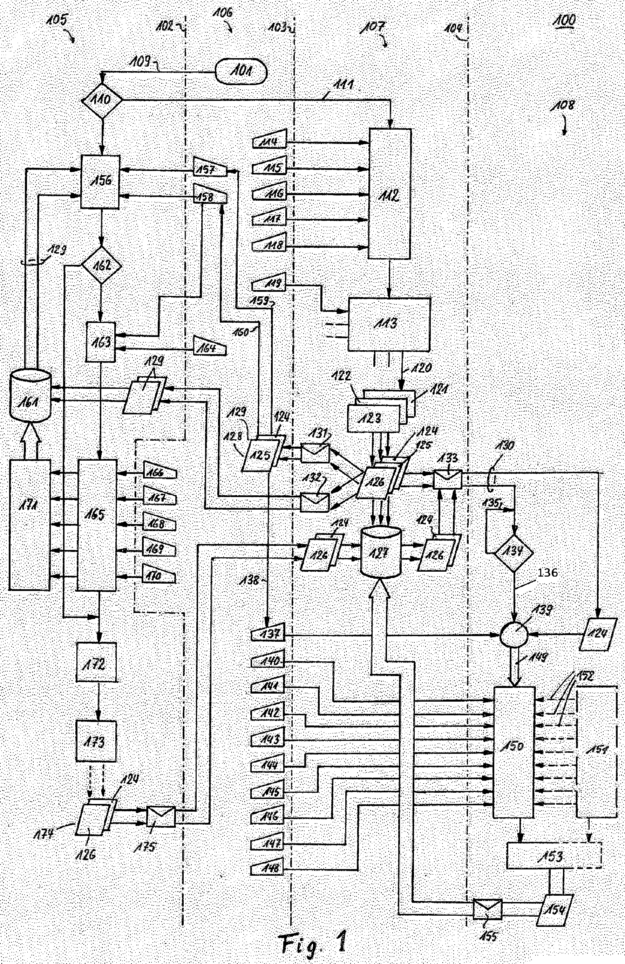

In Figur 1 ist mit dem Bezugszeichen 100 ein Beispiel für ein erfindungsgemäßes Verfahren in einem schematisch wiedergegebenen Ablaufdiagramm bezeichnet und dargestellt. Der Ablauf des Verfahrens 100 wird an einem Startpunkt 101 damit begonnen, dass ein Benutzer eine erste Verwaltungseinheit anwählt, bevorzugt über ein Kommunikationsnetz, besonders bevorzugt über das Internet. Das Diagramm gemäß Figur 1 ist in insgesamt vier Spalten gegliedert, die voneinander durch strichpunktierte Trennungslinien 102, 103, 104 abgegrenzt sind. Eine erste der vier Spalten am linken Rand der Figur 1 enthält alle Verfahrensschritte, die in bzw. von der ersten Verwaltungseinheit ausgeführt werden. Diese Spalte ist mit dem Bezugszeichen 105 bezeichnet. In der zweiten Spalte 106 sind alle Verfahrensschritte schematisch dargestellt, die vom Benutzer bzw. durch ein vom Benutzer betriebenes Datenübertragungsendgerät ausgeführt werden. In der dritten Spalte 107 sind alle Verfahrensschritte dargestellt, die von einer zweiten Verwaltungseinheit ausgeführt werden, und die vierte Spalte 108 umfasst alle Verfahrensschritte, die von einer Bankverwaltungseinheit eines ausgewählten Bankinstituts vorgenommen werden.

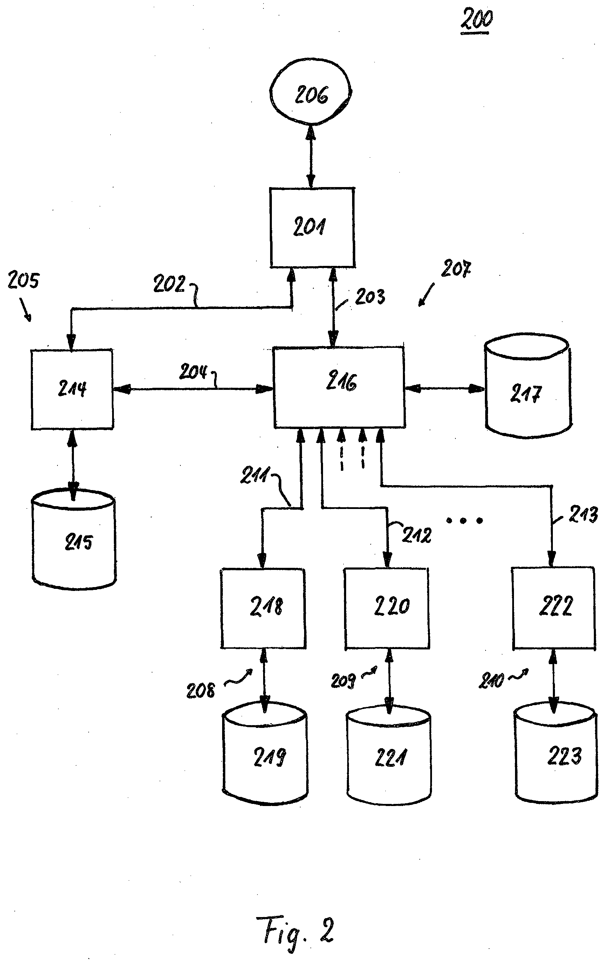

In dem in Figur 2 dargestellten Blockschaltbild einer mit dem Bezugszeichen 200 bezeichneten Anordnung zur Durchführung des in Figur 1 gezeigten Beispiels für das erfindungsgemäße Verfahren 100 ist die erste Verwaltungseinheit mit dem Bezugszeichen 205, der Benutzer mit dem Bezugszeichen 206, das durch den Benutzer 206 betriebene Datenübertragungsendgerät mit dem Bezugszeichen 201, die zweite Verwaltungseinheit mit dem Bezugszeichen 207 und die Bankverwaltungseinheit eines ausgewählten Bankinstituts mit dem Bezugszeichen 208 bezeichnet. Von anstelle des ausgewählten Bankinstituts 208 ebenfalls auswählbaren weiteren Bankinstituten sind in Figur 2 symbolisch zwei weitere Bankverwaltungseinheiten 209 und 210 dargestellt. Da diese jedoch am Ablauf des Verfahrens nicht teilnehmen, sind sie in Figur 1 nicht berücksichtigt.

Im Beispiel des Verfahrens 100 nach Figur 1 wählt der Benutzer 206 durch das Datenübertragungsendgerät 201, bevorzugt einen internetfähigen Computer, die erste Verwaltungseinheit 205 an. Bei der ersten Verwaltungseinheit 205 handelt es sich im bevorzugten Ausführungsbeispiel um ein Internetportal, das durch Aufrufen der zugeordneten Internetadresse, d.h. durch deren Eingabe in eine Bildschirmmaske, die durch ein Suchprogramm, auch als "Browser" bezeichnet, zur Verfügung gestellt wird, angewählt wird. Das Anwählen ist in Figur 1 durch einen Pfeil 109 symbolisiert und führt auf eine erste Abfrage 110 durch die erste Verwaltungseinheit 205. Mit der ersten Abfrage 110 wird der Benutzer 206 gefragt, ob er ein durch die zweite Verwaltungseinheit 207 bereits registrierter Benutzer oder ein neuer Benutzer ist, ob er also bereits eine Berechtigung für einen Zugang zu bzw. eine Verbindung, d.h. eine Datenübertragungsverbindung, mit der ersten Verwaltungseinheit besitzt oder sich noch registrieren möchte bzw. muss.

Ist noch keine Registrierung des Benutzers 206 erfolgt, ist dieser also ein neuer Benutzer, der insbesondere die erste Verwaltungseinheit 205 erstmalig anwählt und sich registrieren möchte, wird eine zweite Datenübertragungsverbindung zwischen dem Datenübertragungsendgerät 201 des Benutzers 206 und der zweiten Verwaltungseinheit 207 hergestellt, die zum Registrieren des Benutzers 206 und/oder des Datenübertragungsendgerätes 201 vorgesehen ist. Das Herstellen dieser zweiten Datenübertragungsverbindung zu der zweiten Verwaltungseinheit 207 ist im Verfahrensablaufdiagramm nach Figur 1 mit dem Pfeil 111 symbolisiert; in der Anordnung 200 ist die zweite Datenübertragungsverbindung mit dem Bezugszeichen 203 bezeichnet.

Von der zweiten Verwaltungseinheit 207 wird nun zum Einleiten des Registriervorgangs ein Registrierdialog 112, 113 begonnen. Dazu wird der Benutzer 206 zur Eingabe eines ihn und/oder das durch ihn betriebene Datenübertragungsendgerät 201 eindeutig identifizierenden ersten Identifikationsdatensatzes aufgefordert; die Aufforderung und die Eingabe erfolgen im Rahmen dieses Registrierdialogs 112, 113. Im Beispiel nach Figur 1 umfasst der Registrierdialog 112, 113 einen ersten Teil 112 und einen zweiten Teil 113.

Im ersten Teil 112 des Registrierdialogs 112, 113 wird gemäß dem dargestellten Beispiel der Benutzer 206 zunächst zur Eingabe einer für ihn gültigen E-Mail-Adresse als erster Teil des ersten Identifikationsdatensatzes aufgefordert. Diese Aufforderung und Eingabe sind mit dem Bezugszeichen 114 bezeichnet. Dabei erfolgen diese Aufforderung und Eingabe 114 und entsprechend auch andere Aufforderungen und Eingaben, die im nachstehenden noch näher beschrieben werden, bevorzugt über Eingabemasken, die von der zweiten Verwaltungseinheit 207 dem Benutzer 206 bzw. dem von ihm betriebenen Datenübertragungsendgerät 201 über die zweite Datenübertragungsverbindung 203 übermittelt werden. Durch seine gültige E-Mail-Adresse sind der Benutzer 206 bzw. das von ihm betriebene Datenübertragungsendgerät 201 gegenüber der zweiten Verwaltungseinheit insoweit identifiziert, als es anhand dieser E-Mail-Adresse möglich ist, dem Benutzer an ihn gerichtete Sendungen, Daten oder Informationen korrekt und eindeutig zu übermitteln. Bevorzugt ist die E-Mail-Adresse der einzige Teil des ersten Identifikationsdatensatzes, durch den der Benutzer 206 bzw. das von ihm betriebene Datenübertragungsendgerät 201 gegenüber der zweiten Verwaltungseinheit identifizierbar ist. Dadurch ist trotz einer schnellen und eindeutigen Identifizierung des Benutzers 206 eine Preisgabe weiterer persönlicher Daten nicht erforderlich.

In dem in Figur 1 dargestellten Beispiel des erfindungsgemäßen Verfahrens 100 wird der Benutzer 206 im nächsten Schritt 115 aufgefordert, durch entsprechende Eingabe in eine Eingabemaske der genannten Art die Allgemeinen Geschäftsbedingungen der ersten Verwaltungseinheit 205 für den beabsichtigten Datenaustausch mit dem Benutzer 206 anzuerkennen, also z.B. die Allgemeinen Geschäftsbedingungen eines von der ersten Verwaltungseinheit 205 angebotenen und betriebenen Bezahl-E-Mail-Systems.

In einem weiteren Verfahrensschritt 116 wird der Benutzer 206 aufgefordert, durch entsprechende Eingabe in eine entsprechende Eingabemaske die Datenschutzbestimmungen der ersten Verwaltungseinheit 205 bzw. auch der zweiten Verwaltungseinheit 207 für den beabsichtigten Datenaustausch mit dem Benutzer 206 anzuerkennen, also im vorliegenden Beispiel die Datenschutzbestimmungen des genannten Bezahl-E-Mail-Systems und des dafür vorgenommenen Registriervorgangs.

Ein weiterer im Beispiel nach Figur 1 dargestellter Verfahrensschritt 117 ist speziell auf das beispielhafte Bezahl-E-Mail-System zugeschnitten. Wie aus dem eingangs zitierten, die Bezahl-E-Mail-Systeme betreffenden Eintrag in die Internet-Enzyklopädie "Wikipedia" hervorgeht, besteht ein Merkmal eines Bezahl-E-Mail-Systems darin, dass ein Benutzer weitere Benutzer zur Teilnahme an dem Bezahl-E-Mail-System werben kann. Der werbende Benutzer erzielt dadurch einen höheren Verdienst. Er kann bei seiner Werbung einem geworbenen Benutzer einen speziellen Datensatz mitteilen, der auch als Werbecode bezeichnet wird. Ist im dargestellten Beispiel der Benutzer 206 ein derartig geworbener Benutzer, kann er im Verfahrensschritt 117 diesen Werbecode eingeben und damit die Werbung durch den werbenden Benutzer bestätigen.

In einem abschließenden Verfahrensschritt 118 wird der Benutzer 206 zur Eingabe eines Sicherheitscodes aufgefordert. Dies ist bevorzugt eine vom Benutzer 206 über eine Tastatur des von ihm betriebenen Datenübertragungsendgerätes vorzunehmende Eingabe von in einer entsprechenden Eingabemaske durch die zweite Verwaltungseinheit 207 vorgegebenen, schlecht lesbaren Zeichen wie z.B. Zahlen, Texten oder Zahlen-Buchstaben-Kombinationen, womit verhindert werden soll, dass der Registriervorgang automatisiert durch eine Datenverarbeitungseinrichtung vorgenommen wird, wodurch Fälschungsmöglichkeiten gegeben wären.

Die Verfahrensschritte 115 bis 118 sind im beschriebenen Ausführungsbeispiel des Verfahrens 100 vom ersten Teil des Registrierdialogs 112 umfasst. Alle in diesen Verfahrensschritten 115 bis 118 vom Benutzer 206 eingegebenen Daten sind Bestandteile des ersten Identifikationsdatensatzes.

Im sich nun anschließenden zweiten Teil 113 des Registrierdialogs 112, 113 wird der Benutzer 206 aufgefordert, aus einer ihm bevorzugt durch ein Auswahlmenü bereitgestellten Liste ein Bankinstitut auszuwählen, über welches einerseits im nachfolgenden ein Kundenidentifizierungsverfahren durchgeführt werden kann und im Beispiel des Bezahl-E-Mail-Systems auch die Vergütung des Benutzers 206 abgewickelt werden soll. Mit seiner diese Auswahl vornehmenden Eingabe 119 erzeugt der Benutzer 206 im zugehörigen, dem zweiten Teil 113 des Registrierdialogs 112, 113 zugerechneten Verfahrensschritt entsprechende, das ausgewählte Bankinstitut benennende Bankauswahldaten. Diese Bankauswahldaten sind ebenfalls vom ersten Identifikationsdatensatz umfasst. Durch einen Pfeil 120 wird in Figur 1 symbolisiert, dass zum Einleiten des Registriervorgangs der den Benutzer 206 und/oder das Datenübertragungsendgerät 201 eindeutig identifizierende erste Identifikationsdatensatz vom Datenübertragungsendgerät 201 an die zweite Verwaltungseinheit 207 übersandt wird.

In der zweiten Verwaltungseinheit 207 werden nun in den nächsten Verfahrensschritten aus bzw. zu dem ersten Identifikationsdatensatz weitere Datensätze erzeugt. Im Verfahrensschritt 121 wird zunächst ein den Benutzer 206 individuell kennzeichnender Kenndatensatz 124, insbesondere eine Benutzer-ID, erzeugt, der einmalig und dauerhaft der E-Mail-Adresse des Benutzers 206 zugewiesen wird. In einem weiteren Verfahrensschritt 122 wird ein Zugangspasswort 125 erzeugt, welches ebenfalls der E-Mail-Adresse des Benutzers 206 und dem zugehörigen Kenndatensatz 124 zugewiesen wird. In einem dritten Verfahrensschritt 123 wird eine Statusinformation 126 zu dem Benutzer 206 erzeugt. Im Verfahrensschritt 127 werden der erste Identifikationsdatensatz oder zumindest Teile davon, der Kenndatensatz 124, das Zugangspasswort 125 und die Statusinformation 126 in der zweiten Verwaltungseinheit 207 abgespeichert.

Die Statusinformation 126 ist bei dem im vorliegenden Beispiel betrachteten Bezahl-E-Mail-System bevorzugt eine Information über einen Geldbetrag oder eine Anzahl geldwerter Punkte oder dergleichen, den bzw. die der Benutzer 206 durch bearbeiten der Bezahl-E-Mails im Datenaustausch mit der ersten Verwaltungseinheit 205 erwirbt. In diesem Fall umfasst die Statusinformation 126 bevorzugt eine Information darüber, welche Höhe der erworbene Geldbetrag oder dergleichen angenommen hat bzw. ob die Höhe des erworbenen Geldbetrags oder dergleichen bereits zur Begleichung bestimmter Kosten, insbesondere zur Begleichung von Kosten, die im Zusammenhang mit dem durchzuführenden Kundenidentifizierungsverfahren entstehen, ausreicht. Dazu ist in einem Ausführungsbeispiel vorgesehen, dass die Statusinformation drei Werte annehmen kann. Ein erster als Status 0 bezeichneter Wert der Statusinformation hat die Bedeutung, dass sich der Benutzer 206 registriert hat, jedoch noch kein Geldbetrag oder dergleichen erworben worden ist. Ein zweiter als Status 1 bezeichneter Wert der Statusinformation hat die Bedeutung, dass der Benutzer 206 einen Geldbetrag oder dergleichen erworben hat, der zum durchführen des Kundenidentifizierungsverfahrens ausreicht. Ein dritter als Status 2 bezeichneter Wert der Statusinformation bedeutet, dass das Kundenidentifizierungsverfahren für den Benutzer 206 erfolgreich abgeschlossen ist.

Von der zweiten Verwaltungseinheit 207 werden nun unter Verwendung der zuvor erzeugten Datensätze mehrere weitere Verfahrensschritte vorgenommen. Zum einen wird ein Quittierungsdatensatz 128 erzeugt, der an den Benutzer 206 per E-Mail 131 übermittelt wird. Der Quittierungsdatensatz 128 umfasst den Kenndatensatz 124 und das Zugangspasswort 125. Damit ist der Quittierungsdatensatz 128 im vorliegenden Ausführungsbeispiel identisch mit einem Zugangsdatensatz 129, der mit dem Kenndatensatz 124 und dem Zugangspasswort 125 die zum Herstellen einer in Figur 2 eingezeichneten ersten Datenübertragungsverbindung 202 dem Datenübertragungsendgerät 201 und der ersten Verwaltungseinheit 205 benötigten Daten umfasst.

Zum zweiten wird von der zweiten Verwaltungseinheit 207 der Zugangsdatensatz 129 erzeugt, an die erste Verwaltungseinheit 205 übermittelt 132 und dort abgespeichert 161. Die Übermittlung 132 erfolgt über eine dritte Datenübertragungsverbindung 204, vergleiche Figur 2. Damit steht der Zugangsdatensatz 129 sowohl dem Benutzer 206 als auch der ersten Verwaltungseinheit 205 zur Verfügung, und der Benutzer 206 kann mit diesen Daten einen Zugang über die erste Datenübertragungsverbindung 202 zur ersten Verwaltungseinheit 205 herstellen.

Zum dritten wird von der zweiten Verwaltungseinheit 207 ein Anfragedatensatz 130 erzeugt, der den Kenndatensatz 124 sowie für die Statusinformation 126 umfasst. Der Anfragedatensatz 130 wird über eine Bank-Datenübertragungsverbindung 211 wie in Figur 2 eingezeichnet an die Bankverwaltungseinheit 208 des ausgewählten, durch die Bankauswahldaten benannten Bankinstituts. Der Anfragedatensatz 130 enthält somit keine persönlichen Daten über den Benutzer 206.

Von der Bankverwaltungseinheit 208 wird aus dem Anfragedatensatz 130 zunächst die Statusinformation 126 in einer zweiten Abfrage 134, auch als Statusabfrage bezeichnet, geprüft. Hat die Statusinformation 126 den Wert Status 0, wird die Bankverwaltungseinheit 208 noch nicht tätig, sondern es wird von der Bankverwaltungseinheit 208 allenfalls registriert, dass sich ein Benutzer 206 mit dem Kenndatensatz 124 bei der zweiten Verwaltungseinheit registriert hat und dass sich dieser Benutzer 206 wahrscheinlich bald melden wird, um die Durchführung eines Kundenidentifizierungsverfahrens bei der Bankverwaltungseinheit 208 zu beantragen. Da der Benutzer 206 jedoch auch die Möglichkeit hat, von einem solchen Antrag Abstand zu nehmen, verbleibt die Bankverwaltungseinheit 208 bei Status 0 quasi in einer Wartestellung. Diese wird durch eine Abfrageschleife 135 in Figur 1 symbolisiert.

Nimmt die Statusinformation den Wert Status 1 an, wird von der Bankverwaltungseinheit 208 das Kundenidentifizierungsverfahren eingeleitet, symbolisiert durch einen Pfeil 136 in Figur 1. Zum Wechsel des Wertes der Statusinformation werden im nachfolgenden noch Erläuterungen an einem Beispiel gegeben. In dem Beispiel des Verfahrens 100 nach Figur 1 ist ein Fall dargestellt, in dem das Kundenidentifizierungsverfahren unmittelbar von dem ausgewählten Bankinstitut unter Einsatz der Bankverwaltungseinheit 208 durchgeführt wird. Das Bankinstitut kann die Durchführung des Kundenidentifizierungsverfahrens jedoch auch an eine andere Institution übertragen, z.B. an die Deutsche Post AG, die dieses dann als sogenanntes "Postident"-Verfahren durchführt.

In einem ersten Schritt 137 dieses Kundenidentifizierungsverfahrens übermittelt der Benutzer 206 den Kenndatensatz 124, den er, wie in Figur 1 durch einen Pfeil 138 symbolisiert ist, aus dem Quittierungsdatensatz 128 bzw. dem Zugangsdatensatz 129 entnimmt, an die Bankverwaltungseinheit 208. Von der Bankverwaltungseinheit 208 wird der vom Benutzer 206 übermittelte Kenndatensatz 124 mit dem aus dem Anfragedatensatz 130 entnehmbaren Kenndatensatz 124 verglichen 139. Fällt dieser Vergleich 139 positiv aus, werden vom Benutzer 206 für das Kundenidentifizierungsverfahren benötigte persönliche Daten abgefragt. In Figur 1 sind dies als bevorzugtes Beispiel: Vorname 140, Nachname 141, Geburtsjahr 142, Geburtsmonat 143, Straße 144, Hausnummer 145, Postleitzahl 146, Wohnort 147 sowie Nummer eines Ausweisdokuments 148. Diese persönlichen Daten 140 bis 148 bilden einen dritten Identifikationsdatensatz und werden entweder vom Benutzer 206 unmittelbar an die Bankverwaltungseinheit 208 übermittelt, oder der Benutzer tritt dazu in persönlichen Kontakt mit dem ausgewählten Bankinstitut, wo ein Mitarbeiter des Bankinstituts die Richtigkeit der Eingabe überprüfen und bestätigen kann. Es besteht auch die technische Möglichkeit, dass die genannten persönlichen Daten 140 bis 148 in einem elektronischen Ausweisdokument gespeichert und von diesem unmittelbar an die Bankverwaltungseinheit 208 übertragen werden.

Bei dem in Figur 1 dargestellten Beispiel des erfindungsgemäßen Verfahrens 100 ist für den durch das Bezahl-E-Mail-System bewirkten Zahlungsverkehr an den Benutzer 206, d.h. für die Auszahlung der vom Benutzer 206 erworbenen Vergütung, die Bereitstellung eines Bankkontos bei dem ausgewählten Bankinstitut vorgesehen. Die vorgenannten persönlichen Daten 140 bis 148 dienen außer zur Feststellung der Existenz und Identität des Benutzers 206 auch zur Einrichtung dieses Bankkontos. Der vom Bankinstitut ausgeführte Verfahrensschritt des Erfassens der vorgenannten persönlichen Daten 140 bis 148 des Benutzers 206 und ihrer Überprüfung auf Echtheit ist in Figur 1 mit dem Bezugszeichen 150 bezeichnet. Ein Pfeil 149 verdeutlicht, dass dieser Verfahrensschritt 150 sich an den Vergleich 139 der auf den beschriebenen unterschiedlichen Wegen in der Bankverwaltungseinheit 208 zusammenlaufenden Kenndatensätze 124 anschließt. Allerdings wird der Verfahrensschritt 150 nur ausgeführt und werden dazu die persönlichen Daten 140 bis 148 des Benutzers 206 nur dann abgefragt, wenn der Vergleich 139 positiv ausfällt, der sich bei dem ausgewählten Bankinstitut bzw. dessen Bankverwaltungseinheit 208 meldende Benutzer 206 tatsächlich der mit dem Anfragedatensatz 130 der Bankverwaltungseinheit 208 avisierte Benutzer ist.

Von der Bankverwaltungseinheit 208 können, sofern der Benutzer 206 bereits als Kunde bei dem ausgewählten Bankinstitut geführt wird, die persönlichen Daten 140 bis 148 auch mit einem Kundendatensatz 151 verglichen werden, der in diesem Fall von dem Benutzer 206 bereits bei dem ausgewählten Bankinstitut angelegt, bevorzugt in der Bankverwaltungseinheit 208 gespeichert ist und insbesondere zu den persönlichen Daten 140 bis 148 gleichartige persönliche Daten umfasst. Eine Prüfung auf Echtheit der übermittelten persönlichen Daten 140 bis 148 kann dann im Verfahrensschritt 150 durch Vergleich mit dem Kundendatensatz 151 vorgenommen werden. Das Hinzuziehen des Kundendatensatzes 151 ist in Figur 1 mit Pfeilen 152 symbolisiert.

An den Verfahrensschritt 150 schließt sich ein Verfahrensschritt 153 an, der eine Einrichtung bzw. Bereitstellung eines Bankkontos in der Bankverwaltungseinheit 208 bewirkt. Ein vorhandenes Bankkonto, wie vorstehend beschrieben, kann ebenfalls benutzt werden. Eine Variante eines solchen Bankkontos stellt eine sogenannte "Prepaid"-Karte dar, d.h. eine Kreditkarte, auf die Aufladebeträge gebucht werden können. Diese Karte wie auch das genannte Bankkonto stimmen bevorzugt in dem Merkmal überein, dass sie nur Guthaben zulassen.

Mit der Einrichtung bzw. Bereitstellung des Bankkontos liegen der Bankverwaltungseinheit 208 alle Daten vor, die zum Erzeugen eines zweiten Identifikationsdatensatzes 154 benötigt werden. Dieser zweite Identifikationsdatensatz 154 dient dazu, von der Bankverwaltungseinheit 208 alle Daten an die zweite Verwaltungseinheit 207 zu liefern, die für die Verwaltung und Auszahlung der vom Benutzer 206 bei der ersten Verwaltungseinheit 205 z.B. durch Lesen und Bearbeiten von Bezahl-E-Mails erworbenen Vergütung benötigt werden. Insbesondere umfasst der zweite Identifikationsdatensatz 154 in dem hier beschriebenen Ausführungsbeispiel den Kenndatensatz 124 des Benutzers 206, seinen Vornamen, seinen Namen, sein Geburtsjahr, die Bankleitzahl und die Kontonummer des eingerichteten Bankkontos sowie einen sogenannten "Hashwert", worunter ein Schlüsseldatensatz zu verstehen ist, der nach einem vorgegebenen Algorithmus von der Bankverwaltungseinheit 208 aus den Informationen über den Nachnamen, den Vornamen, das Geburtsjahr, den Geburtsmonat, die Nummer des Ausweisdokuments, die Straße, die Hausnummer, die Postleitzahl und den Wohnort des Benutzers 206 erzeugt und in den zweiten Identifikationsdatensatz 154 eingestellt wird. Der zweite Identifikationsdatensatz 154 wird dann von der Bankverwaltungseinheit 208 an die zweite Verwaltungseinheit 207 übermittelt 155 und dort zu den bereits über den Benutzer 206 vorliegenden Daten abgespeichert 127. Damit sind das Kundenidentifizierungsverfahren und der Registriervorgang für den Benutzer 206 beendet.

Der Benutzer 206 kann beim Anwählen der ersten Verwaltungseinheit 205 durch Eingeben des Kenndatensatzes 124 und des Zugangspasswortes 125, die ihm mit dem Zugangsdatensatz 129 bzw. mit dem Quittierungsdatensatz 128 übermittelt worden sind, die erste Datenübertragungsverbindung 202 herstellen und über diese einen Datenaustausch zwischen der ersten Verwaltungseinheit 205 und dem von ihm betriebenen Datenübertragungsendgerät 201 vornehmen. Beispielsweise kann der Benutzer über die erste Datenübertragungsverbindung 202 Bezahl-E-Mails von der ersten Verwaltungseinheit 205 empfangen oder, sofern die erste Verwaltungseinheit 205 durch ein Portal gebildet ist, mit dem Zugangsdatensatz 129 Zugang zu diesem Portal erhalten.

Dazu wird der Benutzer 206 nach dem Anwählen der ersten Verwaltungseinheit 205 über die erste Abfrage 110 auf einen sich als nächster Verfahrensschritt anschließenden Anmeldedialog 156 geführt. In dem Anmeldedialog 156 werden vom Benutzer 206 bzw. dem von ihm betriebenen Datenübertragungsendgerät 201 der Kenndatensatz 124 eingegeben 157 und ferner das Zugangspasswort 125 eingegeben 158. Pfeile 159 bzw. 160 symbolisieren dabei, dass der Kenndatensatz 124 und das Zugangspasswort 125 dem Zugangsdatensatz 129 bzw. dem Quittierungsdatensatz 128 entnommen sind. Nach positivem Vergleich mit dem in der ersten Verwaltungseinheit 205 abgespeicherten 161 Zugangsdatensatz 129 im Anmeldedialog 156 erfolgt eine dritte Abfrage 162 durch die erste Verwaltungseinheit 205, ob der Benutzer 206 den Anmeldedialog 156 erstmalig ausführt. Ist dies der Fall, wird von der ersten Verwaltungseinheit 205 als nächster Verfahrensschritt eine Änderung des Zugangspasswortes 125 in einem entsprechenden Dialog 163 mit dem Benutzer 206 bzw. dem Datenübertragungsendgerät 201 vorgenommen. Zu diesem Zweck wird vom Benutzer 206 zunächst das bisherige Zugangspasswort 125 eingegeben 158 sowie anschließend ein neues Zugangspasswort eingegeben 164.

Im Anschluss an die Änderung des Zugangspasswortes 125 wird von der ersten Verwaltungseinheit 205 ein Dialog 165 zur Profildateneingabe zwischen dem Benutzer 206 und der ersten Verwaltungseinheit 205 ausgeführt. Dazu werden vom Benutzer 206 über das Datenübertragungsendgerät 201 in dem vorliegenden Beispiel eines Bezahl-E-Mail-Systems folgende persönliche Profildaten abgefragt und eingegeben: das Land 166, in dem der Benutzer 206 seinen Wohnsitz hat, das Geschlecht 167 des Benutzers 206, das Geburtsjahr 168 des Benutzers 206, die Postleitzahl 169 des Wohnortes des Benutzers 206 und sein Beschäftigungsverhältnis 170. Diese persönlichen Daten, die jedoch für sich genommen keine Identifizierung des Benutzers 206 ermöglichen und damit die Anonymität des Benutzers 206 gegenüber der ersten Verwaltungseinheit 205 einhalten, werden zusammen mit dem dazu bekannten und gehörenden Kenndatensatz 124 zur Benutzerregistrierung 171 zusammengefasst und abgespeichert 161. Der Benutzer 206 ist also der ersten Verwaltungseinheit 205 gegenüber ausschließlich durch den Kenndatensatz 124, jedoch nicht persönlich identifizierbar.

Nach Beendigung der Profildateneingabe 165 wird der Benutzer 206 durch die erste Verwaltungseinheit 205 im vorliegenden Ausführungsbeispiel zum Portal geleitet, über das z.B. Bezahl-E-Mails vom Benutzer 206 angefordert oder anderweitiger Datenaustausch vorgenommen wird. Die Verbindung mit diesem Portal ist in Figur 1 durch einen Verfahrensschritt 172 symbolisiert.

Dem Zweck der ersten Verwaltungseinheit 205 entsprechend werden vom Benutzer 206 z.B. durch das Bearbeiten von Bezahl-E-Mails oder dergleichen Tätigkeiten Vergütungen erworben. Dieser Verfahrensschritt ist in Figur zu Vereins mit dem Bezugszeichen 173 bezeichnet. Insbesondere aufgrund eines Ansammelns dieser Vergütungen, z.B. in Form von Geld oder geldwerten Punkten oder dergleichen, wird von der ersten Verwaltungseinheit 205 eine Statusinformation 126 erzeugt, insbesondere eine derartige Statusinformation 126, die eine Änderung des Wertes der Statusinformation 126 von Status 0 auf Status 1 beinhaltet. Diese Statusinformation 126 wird zusammen mit dem Kenndatensatz 124 als Statusdatensatz 174 an die zweite Verwaltungseinheit 207 übermittelt 175 und in der zweiten Verwaltungseinheit 207 abgespeichert 127. Insbesondere, wenn der Wert der Statusinformation 126 auf Status 1 geändert wird und noch kein Kundenidentifizierungsverfahren für den Benutzer 206 durchgeführt wurde, wird von der zweiten Verwaltungseinheit 207 aus dem Statusdatensatz 174 der Anfragedatensatz 130 erzeugt und wie beschrieben im Verfahrensschritt 133 an die Bankverwaltungseinheit 208 des ausgewählten Bankinstituts übermittelt. Bevorzugt ist der Anfragedatensatz 130 wenigstens weitgehend identisch mit dem Statusdatensatz 174.

Eine Überprüfung der Profildateneingabe 165 bis 170 bei der ersten Anmeldung 156 des Benutzers 206 bei der ersten Verwaltungseinheit 205 kann dadurch erfolgen, dass diese Profildaten aus den Eingaben 165 bis 170 zusammen mit dem Zugangsdatensatz 129 oder zumindest dem Kenndatensatz 124 an die zweite Verwaltungseinheit 207 übertragen werden. In der zweiten Verwaltungseinheit 207 wird dann der Profildatensatz aus den Eingaben 165 bis 170 mit dem zweiten Identifikationsdatensatz 154 verglichen. Bei Abweichungen wird anstelle der Übersendung des Zugangsdatensatzes 129, wie sie anlässlich der Registrierung des Benutzers 206 erfolgt ist, von der zweiten Verwaltungseinheit 207 an die erste Verwaltungseinheit 205 ein Befehl zum Löschen des Zugangsdatensatzes 129 übermittelt, wodurch dem Benutzer 206 ein Herstellen der ersten Datenübertragungsverbindung 202 unmöglich gemacht wird. Dieser Befehl wird z.B. in der Form eines zweiten Zugangsdatensatzes übertragen, der zu dem Kenndatensatz 124 ein abgewandeltes Zugangspasswort enthält, so dass mit dem ursprünglichen Zugangspasswort 125 die erste Datenübertragungsverbindung 202 nicht mehr hergestellt werden kann.

In Figur 2 ist der Aufbau der ersten Verwaltungseinheit 205 mit einem ersten Verwaltungsrechner 214, der mit einer ersten Datenbank 215 zum beschriebenen Abspeichern der der ersten Verwaltungseinheit 205 übermittelten Daten verbunden ist, blockschematisch dargestellt. In dazu entsprechender Weise ist die zweite Verwaltungseinheit 207 mit einem zweiten Verwaltungsrechner 216 ausgestaltet, der mit einer zweiten Datenbank 217 zum beschriebenen Abspeichern der der zweiten Verwaltungseinheit 207 übermittelten Daten verbunden ist. Jede der Bankverwaltungseinheiten 208, 209 bzw. 210, die über BankDatenübertragungsverbindungen 211, 212 bzw. 213 mit der zweiten Verwaltungseinheit 207 und darin insbesondere mit dem zweiten Verwaltungsrechner 216 verbindbar sind, ist in vergleichbarer Weise mit je einem Bankverwaltungsrechner 218, 220 bzw. 222 und je einer damit verbundenen Datenbank 219, 221 bzw. 223 zum beschriebenen Abspeichern der der jeweiligen Bankverwaltungseinheit 208, 209 bzw. 210 übermittelten Daten ausgebildet.

Zusammenfassend wird zur Lösung der eingangs genannten Aufgabe gemäß der Erfindung bei einem Verfahren (100) und einer Anordnung (200), welche bei einem Bezahl-E-Mail-System doppelte oder Scheinmitgliedschaften sicher ausschließen und für einen Benutzer einfach, schnell und sicher handhabbar sind, zum Einrichten einer ersten Datenübertragungsverbindung (202) zwischen einem vom Benutzer (206) betriebenen Datenübertragungsendgerät (201) und einer ersten Verwaltungseinheit (205) bei deren erstmaligem Anwählen (109) durch das Datenübertragungsendgerät zum Registrieren des Benutzers (206) eine zweite Datenübertragungsverbindung (203) zu einer zweiten Verwaltungseinheit (207) hergestellt und ein erster Identifikationsdatensatz (114-119) der zweiten Verwaltungseinheit übersandt, die einen Anfragedatensatz (130) einer ausgewählten Bankverwaltungseinheit (208) und einen Quittierungsdatensatz (128) dem Datenübertragungsendgerät übermittelt (133). Die Bankverwaltungseinheit führt nach Abgleich des Anfragedatensatzes (130) mit einem Kenndatensatz (124) des Benutzers ein Kundenidentifizierungsverfahren durch und erzeugt einen zweiten Identifikationsdatensatz (154), der mit in der zweiten Verwaltungseinheit vorhandenen zweiten Identifikationsdatensätzen abgeglichen wird. Die zweite Verwaltungseinheit erzeugt und übermittelt einen Zugangsdatensatz (129) an das Datenübertragungsendgerät und an die erste Verwaltungseinheit.

### Bezugszeichenliste

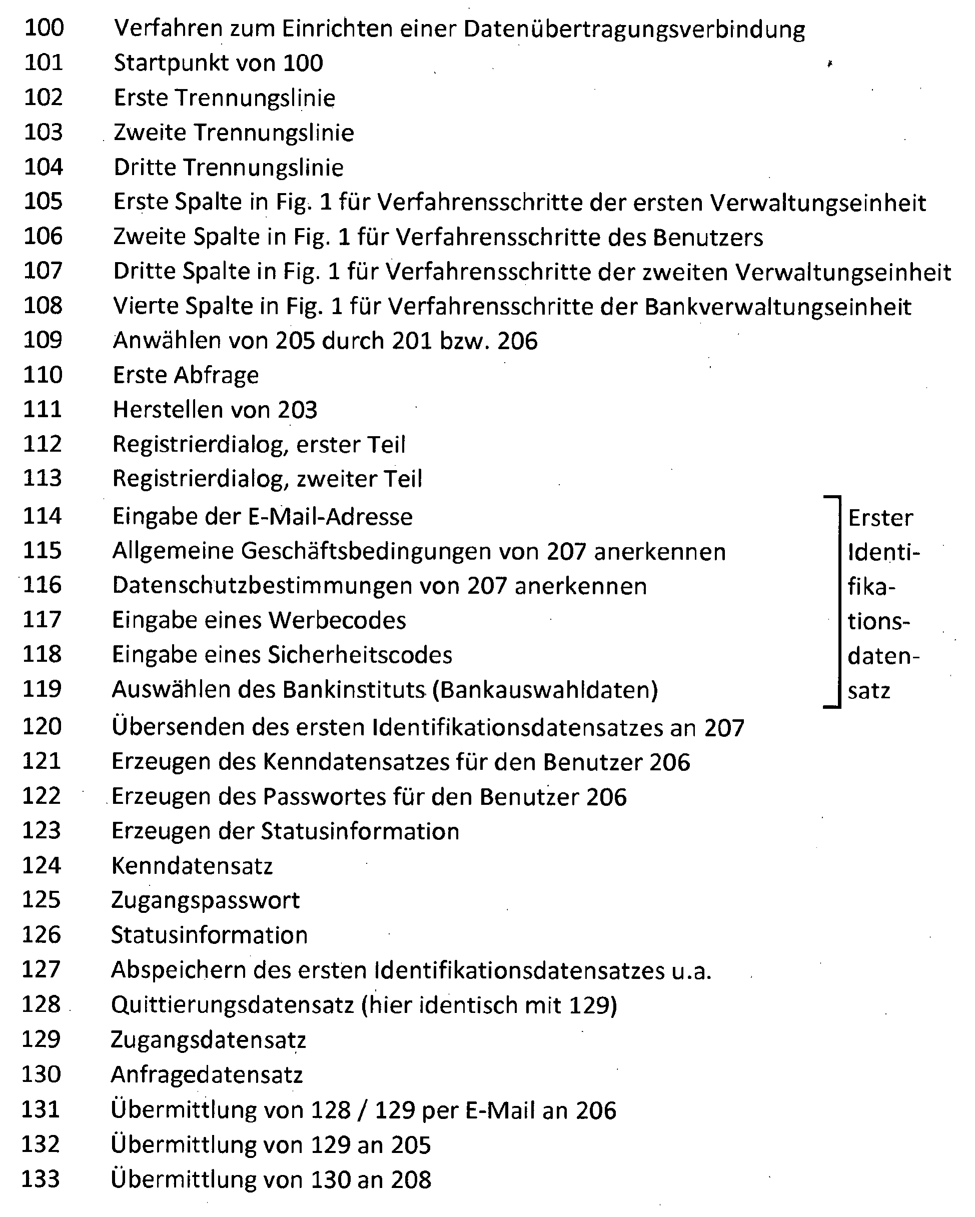

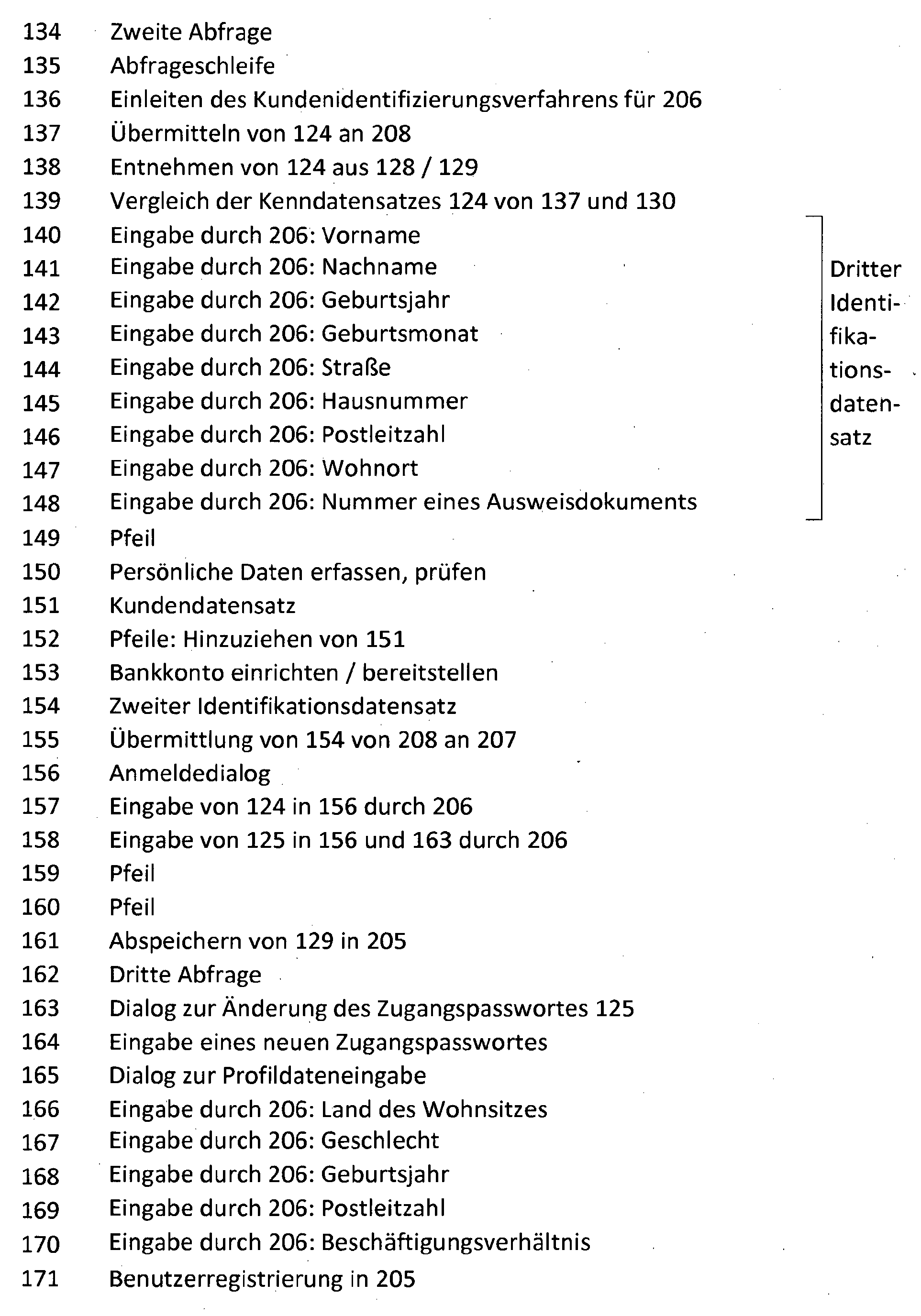

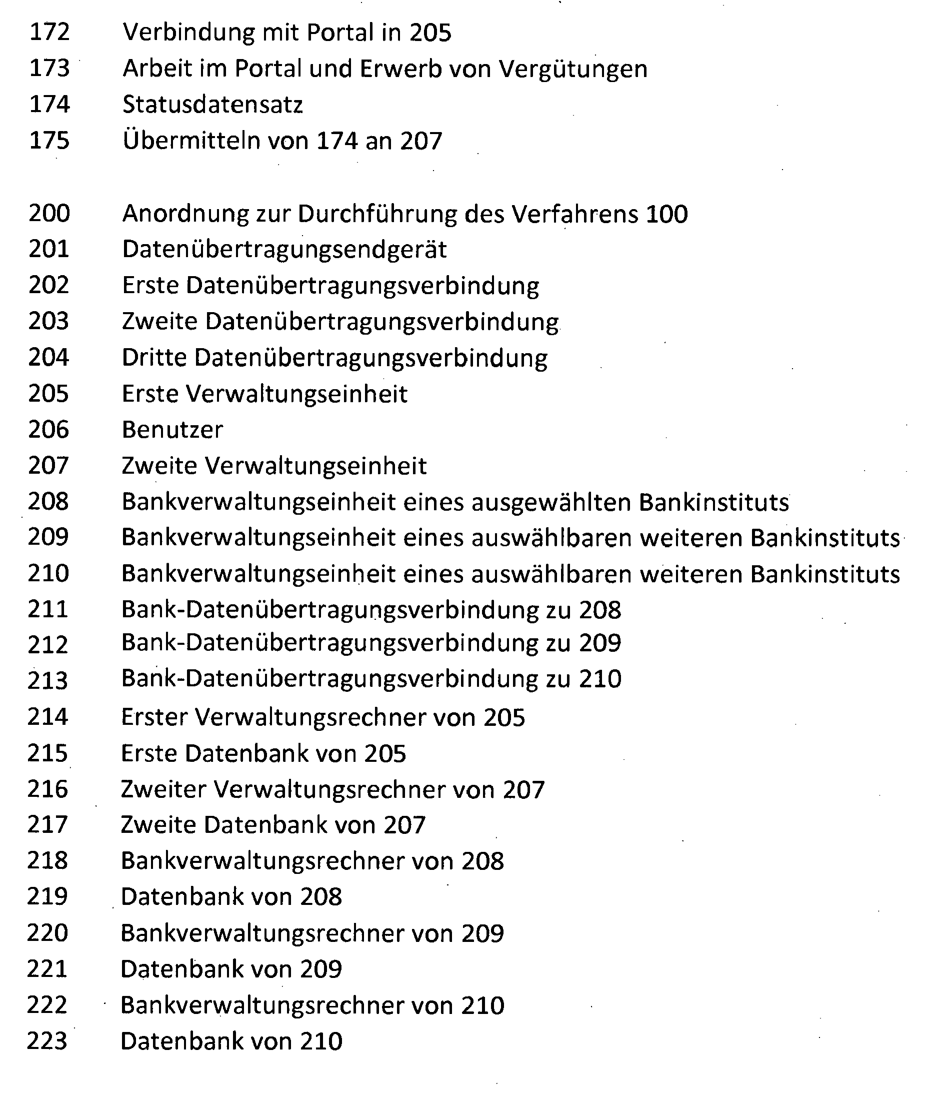

## Patentansprüche

1. Verfahren (100) zum Einrichten einer ersten Datenübertragungsverbindung (202), vorzugsweise über ein Kommunikationsnetzwerk, zwischen einem durch einen Benutzer (206) betriebenen Datenübertragungsendgerät (201) und einer ersten Verwaltungseinheit (205), wobei zum Herstellen der ersten Datenübertragungsverbindung (202) die erste Verwaltungseinheit (205) durch das Datenübertragungsendgerät (201) angewählt und von dem Datenübertragungsendgerät (201) ein Zugangsdatensatz (129) an die erste Verwaltungseinheit (205) übertragen wird,
wobei beim erstmaligen Anwählen (109) der ersten Verwaltungseinheit (205) durch das Datenübertragungsendgerät (201) eine zweite Datenübertragungsverbindung (203) zwischen dem Datenübertragungsendgerät (201) und einer zweiten Verwaltungseinheit (207) hergestellt wird,
wobei die zweite Datenübertragungsverbindung (203) zum Registrieren des Benutzers (206) und/oder des Datenübertragungsendgerätes (201) vorgesehen ist,
wobei zum Einleiten dieses Registriervorgangs ein den Benutzer (206) und/oder das Datenübertragungsendgerät (201) eindeutig identifizierender erster Identifikationsdatensatz (114 bis 119), der Bankauswahldaten (119) eines vom Benutzer (206) ausgewählten Bankinstituts umfasst, vom Datenübertragungsendgerät (201) an die zweite Verwaltungseinheit (207) übersandt wird,
wobei von der zweiten Verwaltungseinheit (207)
einerseits ein Anfragedatensatz (130), der einen dem Benutzer (206) und/oder dem Datenübertragungsendgerät (201) eindeutig zugeordneten Kenndatensatz (124) umfasst, an eine Bankverwaltungseinheit (208) des ausgewählten Bankinstituts übermittelt (133) wird und
andererseits ein Quittierungsdatensatz (128), der den Kenndatensatz (124) umfasst, an das Datenübertragungsendgerät (201) gesandt wird,
wobei von der Bankverwaltungseinheit (208) des ausgewählten Bankinstituts auf die Übermittlung (133) des Anfragedatensatzes (130) hin ein Kundenidentifizierungsverfahren durchgeführt wird, wofür zur eindeutigen Zuordnung des Benutzers (206) zum Anfragedatensatz (130) der Kenndatensatz (124) aus dem Quittierungsdatensatz (128) vom Benutzer (206) an die Bankverwaltungseinheit (208) übermittelt (137) und von der Bankverwaltungseinheit (208) mit dem Kenndatensatz (124) aus dem Anfragedatensatz (130) verglichen (139) und das Kundenidentifizierungsverfahren nur dann durchgeführt wird, wenn dieser Vergleich (139) eine Übereinstimmung der übermittelten Kenndatensätze (124) ergibt,
wobei nach Durchführen des Kundenidentifizierungsverfahrens von der Bankverwaltungseinheit (208) ein zweiter Identifikationsdatensatz (154), durch den Existenz und Identität des Benutzers (206) als natürliche Person belegt wird, erzeugt, an die zweite Verwaltungseinheit (207) übertragen (155), mit dort bereits vorhandenen zweiten Identifikationsdatensätzen (154) vorher registrierter Benutzer (206) verglichen und nur dann in der zweiten Verwaltungseinheit (207) abgespeichert (127) wird, wenn sich bei diesem Vergleich keine Übereinstimmung mit einem der bereits vorhandenen zweiten Identifikationsdatensätze (154) ergibt, und
wobei der Zugangsdatensatz (129) durch die zweite Verwaltungseinheit (207) erzeugt (121, 122) und einerseits an das Datenübertragungsendgerät (201) und andererseits an die erste Verwaltungseinheit (205) übermittelt (131; 132) und in der ersten Verwaltungseinheit (205) abgespeichert (161) wird.

2. Verfahren (100) nach Anspruch 1,
**dadurch gekennzeichnet, dass**
der Bankverwaltungseinheit (208) des ausgewählten Bankinstituts zum Durchführen des Kundenidentifizierungsverfahrens vom Benutzer (206) und/oder vom Datenübertragungsendgerät (201) ein dritter Identifikationsdatensatz (140 bis 148) übermittelt wird.

3. Verfahren (100) nach Anspruch 2,
**dadurch gekennzeichnet, dass**
von der Bankverwaltungseinheit (208) des ausgewählten Bankinstituts zum Durchführen des Kundenidentifizierungsverfahrens der vom Benutzer (206) und/oder vom Datenübertragungsendgerät (201) übermittelte dritte Identifikationsdatensatz (140 bis 148) mit einem zuvor in der Bankverwaltungseinheit (208) gespeicherten Kundendatensatz (151) eines beim ausgewählten Bankinstitut geführten Bankkunden verglichen und
dass bei Übereinstimmung des dritten Identifikationsdatensatzes (140 bis 148) mit dem Kundendatensatz (151) von der Bankverwaltungseinheit (208) die Identität des Benutzers (206) mit dem Bankkunden erkannt und der zweite Identifikationsdatensatz (154) erzeugt wird.

4. Verfahren (100) nach Anspruch 3,
**dadurch gekennzeichnet, dass**
der dritte Identifikationsdatensatz (140 bis 148) wenigstens eines der folgenden Daten des Benutzers (206) umfasst:
Vorname (140), Nachname (141), Geburtsjahr (142), Geburtsmonat (143), Wohnort (147), Postleitzahl (146), Straße (144), Hausnummer (145), Nummer eines Ausweisdokuments (148).

5. Verfahren (100) nach Anspruch 3 oder 4,
**dadurch gekennzeichnet, dass**
der Kundendatensatz (151) wenigstens eines der folgenden Daten des Bankkunden umfasst:
Vorname, Nachname, Geburtsjahr, Geburtsmonat, Wohnort, Postleitzahl, Straße, Hausnummer, Nummer eines Ausweisdokuments.

6. Verfahren (100) nach einem oder mehreren der vorhergehenden Ansprüche,
**dadurch gekennzeichnet, dass**
der Zugangsdatensatz (129) ein Zugangspasswort (125) umfasst, welches zum Herstellen der ersten Datenübertragungsverbindung (202) vom Datenübertragungsendgerät (201) an die erste Verwaltungseinheit (205) übertragen (158) wird.

7. Verfahren (100) nach Anspruch 6,
**dadurch gekennzeichnet, dass**
der Quittierungsdatensatz (128) das Zugangspasswort (125) umfasst.

8. Verfahren (100) nach Anspruch 7,
**dadurch gekennzeichnet, dass**
der Quittierungsdatensatz (128) durch den Zugangsdatensatz (129) gebildet wird.

9. Verfahren (100) nach Anspruch 8,
**dadurch gekennzeichnet, dass**
von der ersten Verwaltungseinheit (205) ein Statusdatensatz (174) erzeugt wird, der eine Statusinformation (126) über einen Parameter eines über die erste Datenübertragungsverbindung (202) erfolgten Datenaustausches zwischen dem Datenübertragungsendgerät (201) und der ersten Verwaltungseinheit (205) enthält,
dass der Statusdatensatz (174) von der ersten Verwaltungseinheit (205) an die zweite Verwaltungseinheit (207) übermittelt wird,
dass die Statusinformation (126) aus dem Statusdatensatz (174) von der zweiten Verwaltungseinheit (207) in den Anfragedatensatz (130) eingefügt und an die Bankverwaltungseinheit (208) übermittelt wird, und
dass das Kundenidentifizierungsverfahren von der Bankverwaltungseinheit (208) in Abhängigkeit von der Statusinformation (126) eingeleitet wird.

10. Anordnung (200) zum Durchführen eines Verfahrens (100) nach einem oder mehreren der vorhergehenden Ansprüche,
**gekennzeichnet durch**
ein **durch** einen Benutzer (206) betreibbares Datenübertragungsendgerät (201),
eine erste Verwaltungseinheit (205),
eine zwischen dem Datenübertragungsendgerät (201) und der ersten Verwaltungseinheit (205) herstellbare erste Datenübertragungsverbindung (202),
eine zweite Verwaltungseinheit (207),
eine zwischen dem Datenübertragungsendgerät (201) und der zweiten Verwaltungseinheit (207) herstellbare zweite Datenübertragungsverbindung (203),
wenigstens eine über je eine Bank-Datenübertragungsverbindung (211, 212, 213) mit der zweiten Verwaltungseinheit (207) verbindbare Bankverwaltungseinheit (208, 209, 210) und
eine zwischen der ersten Verwaltungseinheit (205) und der zweiten Verwaltungseinheit (207 herstellbare dritte Datenübertragungsverbindung (204).

11. Anordnung (200) nach Anspruch 10,
**dadurch gekennzeichnet, dass**
die erste Datenübertragungsverbindung (202) und/oder die zweite Datenübertragungsverbindung (203) und/oder die wenigstens eine Bank-Datenübertragungsverbindung (211, 212, 213) und/oder die dritte Datenübertragungsverbindung (204) über ein Kommunikationsnetzwerk, vorzugsweise über ein Telefonnetz und/oder das Internet, herstellbar sind.

12. Anordnung (200) nach Anspruch 10 oder 11,
**dadurch gekennzeichnet, dass**
die erste Verwaltungseinheit (205) und/oder die zweite Verwaltungseinheit (207) und/oder die wenigstens eine Bankverwaltungseinheit (208, 209, 210) je einen Datenverarbeitungs-, Telekommunikations- und/oder Vermittlungsmittel bildenden Verwaltungsrechner (214, 216, 218, 220, 222) und je ein je eine Datenbank enthaltendes Speichermedium (215, 217, 219, 221, 223) umfasst.

13. Computerprogrammprodukt, aufweisend Programmteile zum Ausführen eines Verfahrens (100) nach mindestens einem der voranstehenden Ansprüche 1 bis 9.

14. Maschinenlesbarer, insbesondere computerlesbarer, Datenträger, auf dem mindestens ein Computerprogrammprodukt gemäß Anspruch 13 aufgezeichnet und/oder gespeichert ist.

## Claims

1. A method (100) for establishing a first data communication link (202) preferably via a communication network, between a data transfer terminal (201) operated by a user (206) and a first management unit (205), wherein for producing the first data communication link (202) the first management unit (205) is selected by the data transfer terminal (201) and an access record (129) is transmitted by the data transfer terminal (201), to the first management unit (205),
wherein at the initial selection (109) of the first management unit (205) by the data transfer terminal (201) a second data communication link (203) is established between the data transfer terminal (201) and a second management unit (207),
wherein the second data communication link (203) is provided for registering the user (206) and / or the data transfer terminal (201),
wherein for initiating this registration process a first identification record (114 to 119) clearly identifying the user (206) and / or the data transfer terminal (201) and comprising bank selection data (119) of a banking institution selected by the user (206) is transmitted from the data transfer terminal (201) to the second management unit (207),
wherein the second management unit (207)
on the one hand transmits a request record (130) comprising a characteristic record (124) clearly assigned to a user (206) and / or the data transfer terminal (201) is transmitted to a bank management unit (208) of the selected banking institution (133) and
on the other hand a confirmation record (128) comprising the characteristic record (124) is transmitted to the data transfer terminal (201),
wherein the bank management unit (208) of the selected banking institution performs a customer identification procedure upon the transmission (133) of the request record (130), during which for the unique assignment of the user (206) to the request record (130) the characteristic record (124) from the confirmation record (128) is transmitted (137) by the user (206) to the bank management unit (208) and is compared (139) to the characteristic record (124) of the request record (130) by the bank management unit (208) and the customer identification procedure is performed only if this comparison (139) results in a match of the transmitted characteristic record (124),
wherein after performing the customer identification procedure a second identification record (154), is generated by the bank management unit (208), which proves the existence and identity of the user (206) as a natural person, is transmitted (155) to the second management unit (207), is compared to already existing second identification records (154) of pre-registered users (206) and is saved (127) in the second management unit (207) only if this comparison does not lead to a match with an existing second identification record (154), and
wherein the access record (129) is generated (121, 122) by the second management unit (207) is transmitted (131; 132) on the one hand to the data transfer terminal (201) and on the other hand to the first management unit (205) and is saved (161) in the first management unit (205).

2. The method (100) according to claim 1, **characterized in that** a third identification record (140 to 148) is transmitted by the user (206) and / or the data transfer terminal (201) to the bank management unit (208) of the selected banking institution for performing the customer identification procedure.

3. The method (100) according to claim 2, **characterized in that** the third identification record (140 to 148) transmitted by the user (206) and / or the data transfer terminal (201) is compared to a customer data record (151) of a customer of the selected banking institution, which has been previously saved in the bank management unit (208), by the bank management unit (208) of the selected banking institute for performing the customer identification process and
that at a match of the third identification record (140 to 148) with the customer record (151) the identity of the user (206)with the bank customer is recognized by the bank management unit (208) and the second identification data record (154) is generated.

4. The method (100) according to claim 3, **characterized in that** the third identification data record (140 to 148) comprises at least one of the following data of the user (206):
first name (140), last name (141), year of birth (142), month of birth (143), place of residence (147), postal code (146), street (144), house number (145), number of an identity document (148).

5. The method (100) according to claim 3 or 4, **characterized in that** the customer record (151) comprises at least one of the following data of the bank customer:
first name, last name, year of birth, month of birth, place of residence, postal code, street, house number, number of an identity document.

6. The method (100) according to one or more of the preceding claims, **characterized in that**
the access record (129) comprises an access password (125), which is transmitted (158) by the data transfer terminal (201) to the first management unit (205) for producing the first data communication link (202).

7. The method (100) according to claim 6, **characterized in that** the confirmation record (128) comprises the access password (125).

8. The method (100) according to claim 7, **characterized in that** the confirmation record (128) is formed by the access record (129).

9. The method (100) according to claim 8, **characterized in that**
a status record (174) is generated by the first management unit (205), which contains a status information (126) about a parameter of a data exchange carried out between the data transfer terminal (201) and the first management unit (205) via the first data communication link (202),
that the status record (174) is transmitted by the first management unit (205) to the second management unit (207),
that the status information (126) of the status record (174) is inserted into the request record (130) by the second management unit (207) and is transmitted to the bank management unit (208), and
that the customer identification procedure is introduced by the bank management unit (208), depending on the status information (126).

10. Arrangement (200) for performing a method (100) according to one or more of the preceding claims, **characterized by**
a data transfer terminal (201) that can be operated by a user (206),
a first management unit (205),
a first data communication link (202) that can be produced between the data transfer terminal (201) and the first management unit (205),
a second management unit (207),
a second data communication link (203) that can be produced between the data transfer terminal (201) and the second management unit (207),
at least one bank management unit (208, 209, 210) that can be connected to the second management unit (207) via one bank data communication link (211, 212, 213) each and
a third data communication link (204) that can be produced between the first management unit (205) and the second management unit (207).

11. The arrangement (200) according to claim 10, **characterized in that** the first data communication link (202) and / or the second data communication link (203) and / or the at least one bank data communication link (211, 212, 213) and / or the third data communication link (204) can be produced via a communication network, preferably a telephone network and / or the Internet

12. The arrangement (200) according to claim 10 or 11, **characterized in that** the first management unit (205) and / or the second management unit (207) and / or the at least one bank management unit (208, 209, 210) has a management computer (214, 216, 218, 220 , 222) forming data processing, telecommunication and / or switching means each and comprises a storage medium (215, 217, 219, 221, 223) each which contains a data base each.

13. A computer program product comprising program parts for performing a method (100) according to at least one of the preceding claims 1 to 9.

14. A machine-readable, in particular computer-readable data storage medium, on which at least one computer program product according to claim 13 is recorded and / or saved.

## Revendications

1. Procédé (100) destiné à créer une première liaison de transmission de données (202), de préférence par un réseau de communication, entre un périphérique de transmission de données (201) géré par un utilisateur (206) et une première unité d'administration (205), par lequel, pour l'établissement de la première liaison de transmission de données (202), la première unité d'administration (205) est appelée par le périphérique de transmission de données (201) et une série de données d'accès (129) est transmise par le périphérique de transmission de données (201) à la première unité d'administration (205),
dans lequel, lors du premier appel (109) adressé par le périphérique de transmission de données (201) à la première unité d'administration (205), une deuxième liaison de transmission de données (203) est établie entre le périphérique de transmission de données (201) et une deuxième unité d'administration (207),
dans lequel la deuxième liaison de transmission de données (203) est prévue pour l'enregistrement de l'utilisateur (206) et/ou du périphérique de transmission de données (201),
dans lequel, pour le lancement du processus d'enregistrement, une première série de données d'identification (114 à 119) identifiant sans équivoque l'utilisateur (206) et/ou le périphérique de transmission de données (201) et comprenant des données d'appel bancaires (119) d'un établissement bancaire choisi par l'utilisateur (206), est transmise par le périphérique de transmission de données (201) à la deuxième unité d'administration (207),
dans lequel la deuxième unité d'administration (207)
transmet à une unité d'administration bancaire (208) de l'établissement bancaire (133) appelé d'une part une série de données d'interrogation (130) qui comprend une série de données d'identification (124) qui sont attribuées sans équivoque à l'utilisateur (206) et/ou au périphérique de transmission de données (201), et
transmet d'autre part au périphérique de transmission de données (201) une série de données d'acquittement (128) qui inclut la série de données d'identification (124),
dans lequel l'unité d'administration bancaire (208) de l'établissement bancaire choisi applique une procédure d'identification du client suite à la transmission (133) de la série de données d'interrogation (130) ; à cette fin, pour une attribution sans équivoque de l'utilisateur (206) à la série de données d'interrogation (130), la série de données d'identification (124) de la série de données d'acquittement (128) est transmise (137) par l'utilisateur (206) à l'unité d'administration bancaire (208) et comparée (139) par l'unité d'administration bancaire (208) à la série de données d'identification (124) provenant de la série de données d'interrogation (130), et la procédure d'identification du client n'est exécutée que si cette comparaison (139) révèle une concordance entre les séries de données d'identification transmises (124),
dans lequel, après l'exécution de la procédure d'identification du client, l'unité d'administration bancaire (208) crée une deuxième série de données d'identification (154) par laquelle l'existence et l'identité de l'utilisateur (206) en tant que personne physique sont prouvées, et qui est transmise (155) à la deuxième unité d'administration (207), où elle est comparée aux deuxièmes séries de données d'identification (154) préexistantes concernant des utilisateurs préalablement enregistrés (206), et seulement ensuite sauvegardée (127) dans la deuxième unité d'administration (207) lorsque cette comparaison ne révèle pas de concordance avec l'une des deux séries de données d'identification (154) qui existent déjà, et
dans lequel la série de données d'accès (129) est créée (121, 122) par la deuxième unité d'administration (207), et transmise (131; 132) d'une part au périphérique de transmission de données (201), et d'autre part à la première unité d'administration (205), et sauvegardée (161) dans la première unité d'administration (205).

2. Procédé (100) selon la revendication 1, **caractérisé en ce qu'**une troisième série de données d'identification (140 à 148) est transmise à l'unité d'administration bancaire (208) de l'établissement bancaire appelé en vue de l'exécution de la procédure d'identification du client par l'utilisateur (206) et/ou par le périphérique de transmission de données (201).

3. Procédé (100) selon la revendication 2, **caractérisé en ce que** la troisième série de données d'identification (140 à 148) transmise par l'unité d'administration bancaire (208) de l'établissement bancaire appelé en vue de l'exécution de la procédure d'identification du client par l'utilisateur (206) et/ou par le périphérique de transmission de données (201) est comparée à une série de données du client (151), sauvegardée au préalable dans l'unité d'administration bancaire (208), d'un client bancaire enregistré auprès d'un établissement bancaire choisi,
et **en ce qu'**en cas de concordance de la troisième série de données d'identification (140 à 148) avec la série de données du client (151), l'identité de l'utilisateur (206) avec le client bancaire est reconnue par l'unité d'administration bancaire (208), et la deuxième série de données d'identification (154) est créée.

4. Procédé (100) selon la revendication 3, **caractérisé en ce que** la troisième série de données d'identification (140 à 148) comprend au moins l'une des données suivantes de l'utilisateur (206) :
prénom (140), nom de famille (141), année de naissance (142), mois de naissance (143), domicile (147), code postal (146), rue (144), numéro d'immeuble (145), numéro d'une pièce d'identité (148).

5. Procédé (100) selon la revendication 3 ou 4, **caractérisé en ce que** la série de données du client (151) comprend au moins l'une des données suivantes du client bancaire :
prénom, nom de famille, année de naissance, mois de naissance, domicile, code postal, rue, numéro d'immeuble, numéro d'une pièce d'identité.

6. Procédé (100) selon une ou plusieurs des revendications qui précèdent, **caractérisé en ce que** la série de données d'accès (129) comprend un mot de passe d'accès (125) qui est transmis (158) pour l'établissement de la première liaison de transmission de données (202) par le périphérique de transmission de données (201) à la première unité d'administration (205).

7. Procédé (100) selon la revendication 6, **caractérisé en ce que** la série de données d'acquittement (128) comprend le mot de passe d'accès (125).

8. Procédé (100) selon la revendication 7, **caractérisé en ce que** la série de données d'acquittement (128) est constituée par la série de données d'accès (129).

9. Procédé (100) selon la revendication 8, **caractérisé en ce que** une série de données de statut (174) est créée par la première unité d'administration (205), série qui contient une information de statut (126) à propos d'un paramètre d'un échange de données entre le périphérique de transmission de données (201) et la première unité d'administration (205), qui a eu lieu par le biais de la première liaison de transmission de données (202),
**en ce que** la série de données de statut (174) est transmise par la première unité d'administration (205) à la deuxième unité d'administration (207),
**en ce que** l'information de statut (126) de la série de données de statut (174) est insérée par la deuxième unité d'administration (207) dans la série de données d'interrogation (130) et transmise à l'unité d'administration bancaire (208),
et **en ce que** la procédure d'identification du client est lancée par l'unité d'administration bancaire (208) en fonction de l'information de statut (126).

10. Agencement (200) destiné à appliquer un procédé (100) selon une ou plusieurs des revendications qui précèdent, **caractérisé par** un périphérique de transmission de données (201) pouvant être géré par un utilisateur (206),
une première unité d'administration (205),
une première liaison de transmission de données (202) qui peut être établie entre le périphérique de transmission de données (201) et la première unité d'administration (205) une deuxième unité d'administration (207),
une deuxième liaison de transmission de données (203) qui peut être établie entre le périphérique de transmission de données (201) et la deuxième unité d'administration (207),
au moins une unité d'administration bancaire (208, 209, 210) qui peut être reliée par une liaison de transmission de données bancaires (211, 212, 213) respective à la deuxième unité d'administration (207) et
une troisième liaison de transmission de données (204) qui peut être établie entre la première unité d'administration (205) et la deuxième unité d'administration (207).

11. Agencement (200) selon la revendication 10, **caractérisé en ce que** la première liaison de transmission de données (202) et/ou la deuxième liaison de transmission de données (203) et/ou la au moins une liaison de transmission de données bancaires (211, 212, 213) et/ou la troisième liaison de transmission de données (204), peuvent être établies par un réseau de communication, de préférence par un réseau téléphonique et/ou par Internet.

12. Agencement (200) selon la revendication 10 ou 11, **caractérisé en ce que** la première unité d'administration (205) et/ou la deuxième unité d'administration (207) et/ou la au moins une unité d'administration bancaire (208, 209, 210) comportent chacune un ordinateur de gestion (214, 216, 218, 220, 222) constituant un moyen de traitement de données, de télécommunication et/ou de transmission et chacune un support de stockage (215, 217, 219, 221, 223) comportant une base de données.

13. Produit logiciel informatique, comprenant des parties de programme destinées à exécuter un procédé (100) selon au moins l'une des revendications 1 à 9 qui précèdent.

14. Support de données lisible par une machine, en particulier lisible par un ordinateur, sur lequel est enregistré et/ou sauvegardé au moins un produit logiciel informatique selon la revendication 13.
